(19) Europäisches Patentamt
European Patent Office
Office européen des brevets

(11) **EP 3 618 600 B1**

(12) **EUROPEAN PATENT SPECIFICATION**

(45) Date of publication and mention
of the grant of the patent:
**07.06.2023 Bulletin 2023/23**

(21) Application number: **18722015.7**

(22) Date of filing: **30.04.2018**

(51) International Patent Classification (IPC):
**A01B 69/04** *(2006.01)*      **G01S 19/42** *(2010.01)*

(52) Cooperative Patent Classification (CPC):
**A01B 69/008; G01S 19/40; G05D 1/0212;**
G05D 2201/0201

(86) International application number:
**PCT/EP2018/061057**

(87) International publication number:
**WO 2018/202633 (08.11.2018 Gazette 2018/45)**

(54) **GUIDANCE WORKING DEPTH COMPENSATION**

ANLEITENDE ARBEITSTIEFENKOMPENSATION

COMPENSATION DE PROFONDEUR DE TRAVAIL DE GUIDAGE

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **02.05.2017 US 201762500408 P**

(43) Date of publication of application:
**11.03.2020 Bulletin 2020/11**

(73) Proprietor: **AGCO International GmbH**
**8212 Neuhausen am Rheinfall (CH)**

(72) Inventor: **KAUFMANN, Oliver**
**87616 Marktoberdorf (DE)**

(74) Representative: **AGCO Intellectual Property Department**
**AGCO Limited**
**Abbey Park Stoneleigh**
**Kenilworth CV8 2TQ (GB)**

(56) References cited:
| | |
|---|---|
| **CN-U- 205 847 882** | **US-A1- 2007 198 185** |
| **US-A1- 2010 312 428** | **US-A1- 2011 196 565** |
| **US-A1- 2012 215 410** | **US-A1- 2012 296 529** |
| **US-A1- 2013 041 549** | **US-A1- 2014 025 260** |
| **US-A1- 2014 324 291** | **US-B1- 6 501 422** |

## Description

### TECHNICAL FIELD

The present disclosure is generally related to agriculture technology, and, more particularly, computer-assisted farming.

### BACKGROUND

Efforts to automate or semi-automate farming operations have increased considerably over recent years. Such efforts serve not only to reduce operating costs but also improve working conditions for operators and reduce operator error, enabling gains in operational efficiency and yield. For instance, agricultural machines may employ an auto-guidance system to reduce operator fatigue and costs. Auto-guidance systems enable traversal through a field based on a navigation point on the vehicle which are matched with waypoints (geographic location points that define or correspond with a wayline, a path plan or a swath plan) by influencing the vehicles steering system. The system continually compares updated positional coordinates of reference points, e.g. the navigation point and the waypoints to enable guidance operations. As used herein the term "reference points" includes both navigation points and waypoints which are necessary to guide a vehicle on a wayline. The navigation point may be defined by 3D coordinates with reference to a coordinate system on a vehicle while waypoints may be defined by 3D coordinates with reference to a coordinate system used for satellite navigation. Navigation points are typically offset from an antenna location, and hence depend on where the antenna is mounted on the vehicle. Typically, a navigational point is chosen close to ground.

Yet another reference point for use with auto-guidance systems may be associated with an implement towed by an agricultural machine. By way of example, an implement reference point may be a navigation point defined by an offset from a navigation point associated with a towing vehicle.

However, the nature of the terrain may cause farming operations for such guided machines to render unintended results.

### BRIEF DESCRIPTION OF THE DRAWINGS

Many aspects of the disclosure can be better understood with reference to the following drawings. The components in the drawings are not necessarily to scale, emphasis instead being placed upon clearly illustrating the principles of the present disclosure. Moreover, in the drawings, like reference numerals designate corresponding parts throughout the several views.

FIG. 1 is a schematic diagram that illustrates in front elevation view an agricultural machine demonstrating geotropism and shortcomings to farming using auto-guidance on sloped terrain.

FIG. 2 is a schematic diagram that illustrates in front elevation view an agricultural machine demonstrating dam formation for specialized crops and shortcomings to farming using auto-guidance on sloped terrain.

FIG. 3 is a schematic diagram that illustrates in front elevation view an agricultural machine demonstrating the determination of the navigation point in a vehicle.

FIG. 4A is a schematic diagram that illustrates in front elevation view an agricultural machine in which a first embodiment of a working depth compensator determines a navigation point on sloped terrain for an initial operation.

FIG. 4B is a schematic diagram that illustrates the view in the reference plane used in satellite navigation in which references used for guiding the vehicle are depicted for the initial operation shown in FIG. 4A.

FIG. 5A is a schematic diagram that illustrates in front elevation view an agricultural machine in which a first embodiment of a working depth compensator determines a navigation point on sloped terrain for a subsequent operation.

FIG. 5B is a schematic diagram that illustrates the view in the reference plane used in satellite navigation in which relative points and waylines used for guiding the vehicle are depicted for the subsequent operation shown in FIG. 5A.

FIG. 6A is a schematic diagram that illustrates in front elevation view an agricultural machine in which a first embodiment of a working depth compensator determines a navigation point on sloped terrain for a further subsequent operation.

FIG. 6B is a schematic diagram that illustrates the view in the reference plane used in satellite navigation in which references used for guiding the vehicle are depicted for the further subsequent operation shown in FIG. 6A.

FIG. 6C is a schematic diagram that illustrates the view in the reference plane used in satellite navigation in which references used for guiding the vehicle are compared for varying working depth

FIG. 7A is a schematic diagram that illustrates in front elevation view an agricultural machine in which a second embodiment of a working depth compensator determines a waypoint on sloped terrain for an initial operation.

FIG. 7B is a schematic diagram that illustrates the view in the reference plane used in satellite navigation in which references used for guiding the vehicle are depicted for the initial operation shown in FIG. 7A.

FIG. 8A is a schematic diagram that illustrates in front elevation view an agricultural machine in which a second embodiment of a working depth compensator determines a wayline point on sloped terrain for a subsequent operation.

FIG. 8B is a schematic diagram that illustrates the view in the reference plane used in satellite navigation in which references used for guiding the vehicle are depicted for the subsequent operation shown in FIG. 8A.

FIG. 9A is a schematic diagram that illustrates in front elevation view an agricultural machine in which a second embodiment of a working depth compensator determines a wayline point on sloped terrain for a further subsequent operation.

FIG. 9B is a schematic diagram that illustrates the view in the reference plane used in satellite navigation in which references used for guiding the vehicle are depicted for the further subsequent operation shown in FIG. 9A.

FIG. 9C is a schematic diagram that illustrates the view in the reference plane used in satellite navigation in which references used for guiding the vehicle are depicted for an alternative initial operation.

FIG. 9D is a schematic diagram that illustrates the view in the reference plane used in satellite navigation in which references used for guiding the vehicle are depicted for an alternative subsequent operation.

FIG. 9E is a schematic diagram that illustrates the view in the reference plane used in satellite navigation in which references used for guiding the vehicle are depicted for an alternative subsequent operation.

FIG. 10A is a schematic diagram that illustrates in front elevation view an agricultural machine in which an embodiment of a working depth compensator determines a reference point on a surface of a sloped terrain.

FIG. 10B is a schematic diagram that illustrates in front elevation view an agricultural machine in which an embodiment of a working depth compensator determines a reference point above a surface of a sloped terrain.

FIG. 11A is a schematic diagram that illustrates in front elevation view an agricultural machine and an implement in which a third embodiment of a working depth compensator determines an implement reference point on sloped terrain for a subsequent operation with reference to an initial operation shown in FIG. 9A.

FIG. 11B is a schematic diagram that illustrates the view in the reference plane used in satellite navigation in which references used for guiding the implement are depicted for the initial operation shown in FIG. 11A.

FIGS. 12A-12D are schematic diagrams that illustrate in front elevation view an agricultural machine and an implement in which a third embodiment of a working depth compensator determines an implement reference point on sloped terrain for an initial and subsequent operation for the application of grape production.

FIG. 13A is a block diagram that illustrates an embodiment of a control system implemented in an embodiment of a working depth compensator.

FIG. 13B is a block diagram of an embodiment of a computing system used in the control system of FIG. 5A.

FIG. 14 is a flow diagram that illustrates an embodiment of a working depth compensating method.

## DESCRIPTION OF EXAMPLE EMBODIMENTS

Overview

In the embodiments, a system as defined in claim 1 is disclosed.

Detailed Description

Certain embodiments of a working depth compensator, including associated systems and methods, are disclosed that determine reference points for auto-guidance traversal of a field during multi-stage farming operations by considering a working depth of at least a first stage of operations and computing a path or path corrections on sloped terrain for subsequent (second, third, fourth, etcetera stages) operations. In other words, the depth of a first farming or agricultural operation is considered in planning or proceeding to a second, subsequent farming operation.

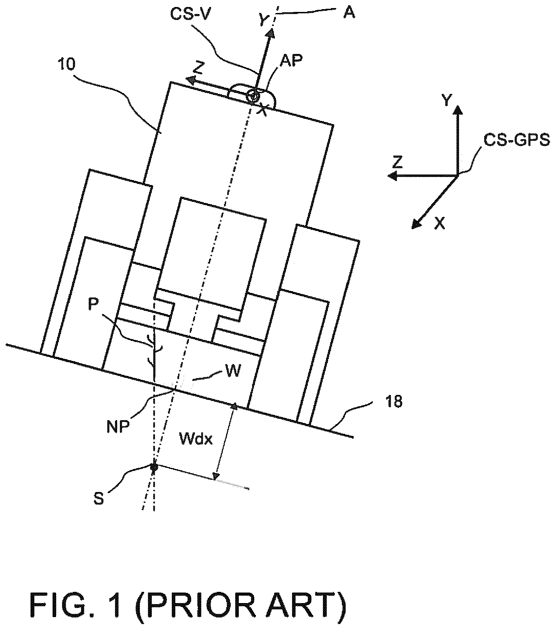

Embodiments of the working depth compensator, including associated systems and methods, use reference points to guide a vehicle or an implement relative to a wayline. Generally these reference points are described with three-dimensional coordinates with reference to a coordinate system used and defined for satellite navigation when a wayline or its associated waypoints are described. If the reference point is associated with a vehicle, such as, for example, a vehicle navigation point, the three-dimensional coordinates may be determined with reference to a vehicle coordinate system. The coordinate systems used to define reference points may be, for example, Cartesian coordinate systems (using X,Y,Z coordinates). As depicted in FIG. 1, a coordinate system for the vehicle (CS-V) and a coordinate system for the satellite positioning system (CS-GPS) may both be Cartesian coordinate systems, but the two systems may not be aligned. An offset to a reference point may be described herein in terms of a single coordinate or axis, with the understanding that the offset does not affect other coordinates or axes. Furthermore, the present description and drawings may describe changes to reference points in terms of two dimensions and using two-dimensional views even though the calculation of coordinates, especially of wayline points of a wayline, may require three-dimensional transformation of coordinates using known mathematical methods. This is provided for simplicity reasons.

Digressing briefly, it is known that plants grow in a direction of Earth center, an effect referred to as geotropism. This gravitational influence of plant growth may result in problems if the plants are grown on sloped terrain and worked with machines that use guidance systems. For instance, and referring to FIG. 1, in a first operation (e.g., planting) of a multi-stage farming operation (e.g., the stages involving different/distinct functions occurring in non-overlapping intervals, such as separated by days, weeks or months), seeds (e.g., seed, S) may be placed in the soil at a predetermined working depth, WDx from a soil surface as dispensed from a machine (or from a towed implement, not shown, coupled to the machine). During the planting operation, a guidance system for the machine may consider a navigation point (e.g., referred to as NP) for use in guiding the vehicle along a predetermined path delineated by the wayline points. Assume the soil surface is along a slope as illustrated in FIG. 1. An effect of geotropism is that the plant grows at an angle to the ground 18 and not along axis A of the machine being the symmetric axis of the vehicle 10 in front view and any predetermined position in longitudinal direction. In other words, the plant does not grow through the navigation point, NP. Consequently, any subsequent operation using automatic guidance and a wayline/path determined in a previous operation (or a shared wayline / path plan) considers an incorrect position of the plant. For instance, during a second stage (high-precision weed control) of the farming operation using, say, a mechanical harrow/rake that agitates the soil surface, the harrow is guided via satellite signals and auto-steer control along a path that matches the now unsuitable navigation point, NP, in which case the plant, P, may be destroyed instead of the weeds, W.

Similarly, if the second stage, or even later stages, of the farming operation involves a precision fertilizer application, the weeds, W, may be treated instead of the plants, P. In contrast, by using certain embodiments of a working depth compensator according to the present invention, precision or ecological farming (e.g., in the case of weed control, using mechanical harrows instead of blanket application of pesticides) may be implemented with a mitigated or eliminated risk to plant growth.

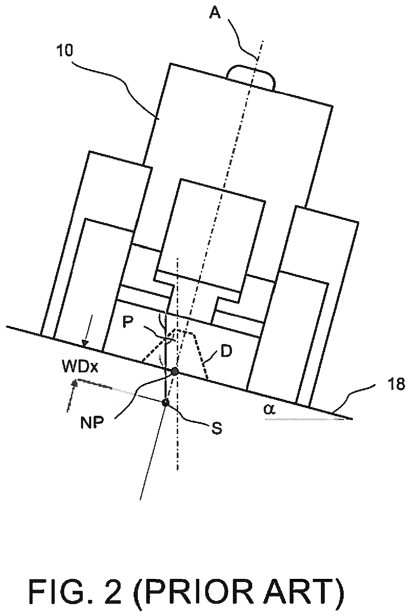

Attention is now directed to FIG. 2, which is a schematic diagram that illustrates how a sloped terrain can influence soil dam formation during guidancebased farming. Certain specialized crops, such as asparagus, are grown in soil dams, such as the soil dam D illustrated in FIG. 2. In the case of asparagus, the asparagus plant P is normally planted at point S (aligned with the axis, A, of the machine 10) located beneath the soil surface 18 using reference point NP for guidance. In a subsequent operation, the soil dam, D, is built-up by using a known dam former using the same path as before. However, on a slope, the effect is that the plant, P, may grow and break the soil dam, D, at the side of the dam instead of through the top plane as desired. This condition makes harvesting, especially automated harvesting, difficult.

Grape production is another agricultural operation that benefits from the advantages of the present invention. Grape production is often done on hilly ground and requires agricultural work at or near the ground surface, such as weed control, but also requires work done at a considerable height above the ground surface, such as when cutting leaves or removing leaves with a leaf cutter or blower so that the sunlight can reach each the grapes. Thus, the effects of geotropism can create severe problems in using guidance systems for multiple operations in grape production.

Having summarized certain features of a working depth compensator of the present disclosure, reference will now be made in detail to the description of a working depth compensator as illustrated in the drawings. While the working depth compensator will be described in connection with these drawings, there is no intent to limit it to the embodiment or embodiments disclosed herein. For instance, in the description that follows, one focus is on a self-propelled machine having a global navigation satellite systems (GNSS) receiver arranged centrally atop the machine and using a single antenna, however it should be appreciated by one having ordinary skill in the art in the context of the present disclosure that the GNSS receiver may be located elsewhere and/or comprise additional antennas in some embodiments and hence is contemplated to be within the scope of the disclosure. Further, though the correction for the terrain (e.g., sloped surface) is deemed suitable for guiding subsequent operations for the machine and an integrated or towed (e.g., through a tow bar, three-point hitch, etc.) implement, in some embodiments, appropriate correction (e.g., using GNSS modules on both the implement and the towing machine, and/or communicating differences between computing systems used in towed and towing machines, etc.) may be performed for offsets in travel direction/angle between the towing machine and towed implement while traversing a slope or turns in some embodiments. Regarding the determination of working depth, an operator may enter at a user interface the value for the working depth, or this value may be provided automatically by the implement (e.g., implement controller or sensor) forwarding settings via ISOBUS to the computing system 16. Alternatively, the working depth may be determined by measuring the position of a three-point hitch and calculate the working depth based on the geometry of the three-point hitch and/or the implement. Further, although the description identifies or describes specifics of one or more embodiments, such specifics are not necessarily part of every embodiment, nor are all various stated advantages necessarily associated with a single embodiment or all embodiments. On the contrary, the intent is to cover all alternatives, modifications and equivalents included within the scope of the disclosure as defined by the appended claims. Further, it should be appreciated in the context of the present disclosure that the claims are not necessarily limited to the particular embodiments set out in the description.

Note that reference points comprise spatial coordinate values that are used by the machine to compare with continually updated, satellite-based positional coordinates to autonomously or semi-autonomously guide a machine over a ground surface through one or more fields.

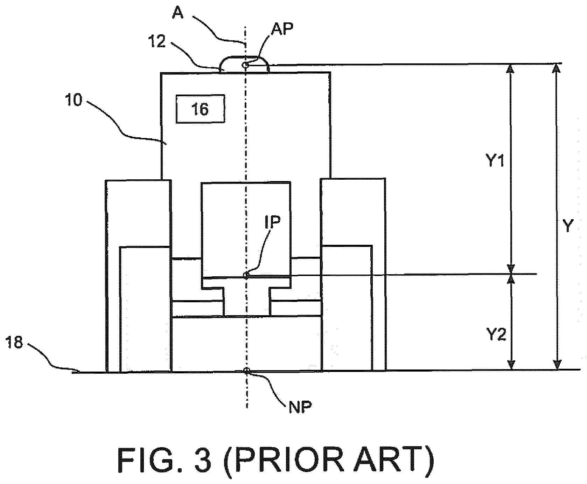

FIG. 3 illustrates an exemplary method of determining a vehicle navigation point NP which is known in the art. An exemplary tractor 10 including an automated guidance system 16 is illustrated. The tractor 10 includes a GNSS receiver assembly 12 operable to receive navigational signals from a plurality of GNSS satellites and to calculate its geographic location as a function of the signals. The GNSS receiver assembly 12 typically corresponds to the location of a satellite signal receiver associated with the component 12. While for practical purposes the location of the GNSS receiver assembly 12 and the location of the satellite receiver antenna (or other receiver antenna) are often identical, the location of the satellite receiver antenna will be referred to herein as the antenna point AP. The antenna point AP corresponds to the geographic location of the tractor used by the guidance system unless an offset or adjustment is applied, as explained herein. The GNSS receiver assembly 12 may be placed at or near a top of the vehicle, such as on the top of the cabin of the tractor 10, to maximize satellite signal reception. Placing the GNSS receiver assembly 12 on top of the vehicle results in an antenna point AP corresponding to a geographic location of the top of the vehicle that may be several meters removed from the ground surface18. Modern precision agriculture relies on positioning with an accuracy of less than one meter and sometimes an accuracy within the range of one or two centimeters, such that using an antenna point AP located several meters from the ground surface 18 may result in errors in automated guidance. For these reasons, most agricultural applications based on satellite navigation require that the vehicle be guided using a point other than the antenna point AP. The navigation point (NP) is a virtual point used by the guidance system 16 to guide the vehicle along a defined wayline/path. For example, algorithms run by vehicle guidance system 16 may control vehicle steering so that the navigation point of the vehicle moves along a defined or desired path (or matches with waypoints associated with the path).

Alternatively, rather than applying an offset or adjustment Y to the antenna point AP to generate the navigation point NP, another virtual point referred to as intermediate point IP may be introduced. One advantage of using the intermediate point IP is that the distance Y1 between antenna point AP and intermediate reference point IP is mostly fixed and depends on the design of the tractor 10 while the distance Y2 between intermediate point IP and navigation point NP is variable when the tire size or the tire inflation pressure is changed. Thus, this intermediate point IP is commonly defined as the intersection point between vertical axis A and the horizontal rotational axis of the rear axle. A system to determine the distance Y2 is described in published United States Patent Application Publication No. 2016/0355187.

United States Patent Application Publication No. 2018/0024252 describes another system for determining a navigation point on a vehicle. In that system a position of a first portion of the mobile machine (e.g., the vehicle cabin with GNSS receiver assembly on its top being attached to the chassis via a cab suspension system) relative to a second portion of the mobile machine (e.g., the chassis) is determined to calculate the offset of a navigation point according to the position of the first portion of the mobile machine relative to the second portion of the mobile machine.

While the systems disclosed in US 2016/0355187 and US 2018/0024252 work well in some conditions, neither system considers working depth and ground surface slope to adjust a reference point for auto-guidance. In US 2012/296529 the slope, but not the working depth, is considered.

It should be appreciated that, though the machine 10 is illustrated as a tractor in the embodiments described below, other machines (or combination of machines) may be used, including self-propelled machines with an integrated implement (e.g., an AGCO Terragator) or a machine (e.g., tractor, combine, etc.) with a towed implement, such as a planter, sprayer, mechanical harrow, etc. The machine 10 is illustrated with a GNSS receiver assembly 12, which includes a GNSS receiver and an antenna. In some embodiments, the GNSS receiver assembly 12 may include any one or a combination of multiple GNSS receivers or multiple antennas. The GNSS receiver assembly 12 is configured to receive position information for the machine 10 from plural satellites of one or more GNSS satellite networks (e.g., Global Positioning System (GPS), Galileo, Compass, GLONASS, etc.), as is known. The position information may be augmented with public and/or proprietary differential correction signals (e.g., DGPS, SBAS, etc.) and/or real-time kinematic (RTK) satellite services, as is known. For purposes of discussion, a single GNSS receiver using a single antenna is described for the GNSS receiver assembly 12, though it should be appreciated by one having ordinary skill in the art that additional antennas may be used in some embodiments, and/or that additional GNSS receivers may be used (e.g., plural receivers on the machine 10 and/or added to a towed implement). The antenna of the GNSS receiver assembly 12 is centrally located atop the machine 10, as indicated by a central axis, A. In some embodiments, the antenna and/or GNSS receiver assembly 12 may be located elsewhere on the machine 10. The machine 10 further comprises a computing system 16, which includes one or more computing devices or electronic control units (ECUs) comprising guidance software, among other software. In some embodiments, the functionality of the computing system 16 may reside entirely within the machine 10 or be distributed amongst the machine 10 and a coupled implement. In some embodiments, all or a portion of the functionality of the computing system 16 may reside remotely, such as at a farm computing network, server farm, cloud computing platform, etc. located remote from the farm. For brevity and clarity in describing certain features of a working depth compensator, the computing system 16 is described in the context of the invention as residing in the machine 10, with further description of the computing system 16 set forth further below.

In a first preferred embodiment of the invention a working depth compensator adjusts a navigation point on the vehicle depending on the working depth and ground surface slope. With this embodiment of the invention a single set of waylines, such as a set of parallel A-B waylines covering the complete field, is used for a first initial operation as well as any subsequent stage of operations without adjustment or modification.

As used herein, the term "working depth" generally refers to a distance between an operating point and the ground surface. Thus, working depth includes a distance below the ground surface as well as a distance above the ground surface, depending on the particular agricultural operation and the operating point associated with the operation.

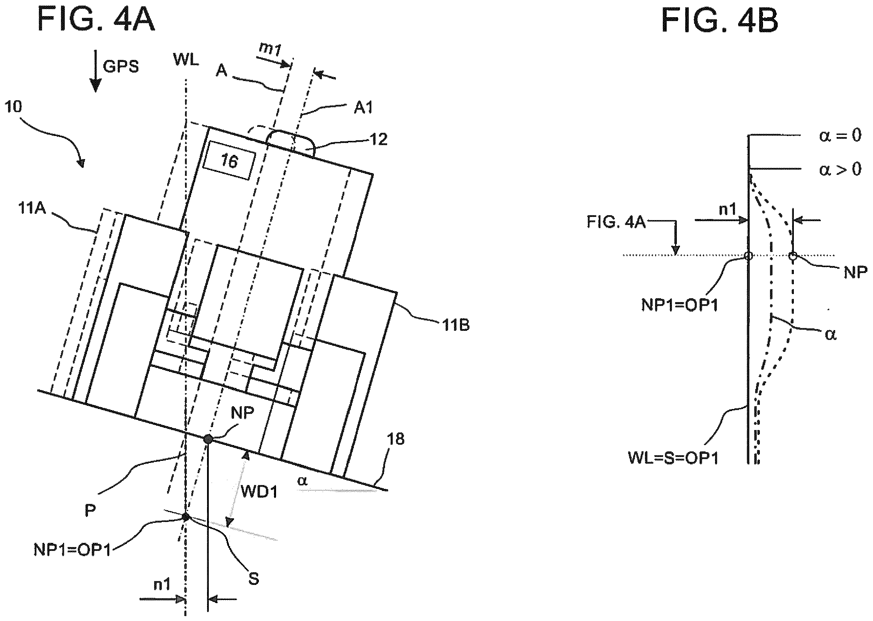

Turning now to FIG. 4A, an agricultural machine 10 with a guidance system including a working depth compensator according to embodiments of the invention is illustrated operating on a field with a ground surface slope of angle $\alpha$. The working depth compensator of the guidance system 16 offsets the navigation point NP1 along axis A during the initial operation by considering the current operating position OP1, working depth WD1, and slope $\alpha$. By using the offset navigation point NP1 (offset to match with operating point OP1) for guidance on wayline WL (indicated with a vertical line), the position of the vehicle 10 is shifted laterally from position 11A (corresponding to position A of the vertical axis) distance m1 along the ground surface 18 to position 11B (corresponding to position A1 of the vertical axis) when driving along the slope. The values for the offset distance n1 (in the satellite reference plane and perpendicular to gravity) and m1 (along ground surface 18) can be calculated using slope $\alpha$ and working depth WD1 according to known trigonometric equations.

FIG. 4B is a view in the reference plane used in satellite navigation indicated by arrow GPS in FIG. 4A. The reference plane depicted in FIG. 4B is perpendicular to the direction of gravity and tangential to a flat surface of the earth and/or a reference ellipsoid (e.g., WGS-84). The geographic position of the machine 10 as it moves along the ground surface 18 (shown in Figure Fig. 4A) is depicted with a horizontal line designated as NP1/OP1. By offsetting the navigation point NP1 and using this reference point (that is, the offset navigation point) for guiding the machine 10 along the predetermined wayline WL, the ground based navigation point NP (being the intersection between vehicle axle A and soil surface 18) is only aligned with wayline WL on a ground surface that is level (perpendicular to the direction of gravity). With increasing slope $\alpha$ (dramatically depicted by the curved broken lines in FIG. 4B), ground surface based navigation point NP diverges from wayline WL (indicated by distance n1 for NP1) and approaches wayline WL as slope $\alpha$ decreases. The same applies to the position of the vehicle 10, which moves away from the position 11A in a downhill direction toward position 11B with increasing slope $\alpha$ and moves toward position 11A in an uphill direction as the angle $\alpha$ decreases toward zero. The wayline WL always corresponds to the position of the seed S. Generally the offset of the navigation point along a wayline is a continuous, smooth process (as slope $\alpha$ is also continuously changing) without abrupt changes, as abrupt changes may result in abrupt lateral offsets of the vehicle which are not feasible for most agricultural operations, e.g. if an implement is operated in the soil.

Additional waylines (e.g., parallel A-B or contoured waylines) are travelled by the machine 10 accordingly. For clarity reasons the subsequent operations are explained by just depicting one single A-B wayline being part of a set of waylines which are not shown but which may be necessary to work a complete field.

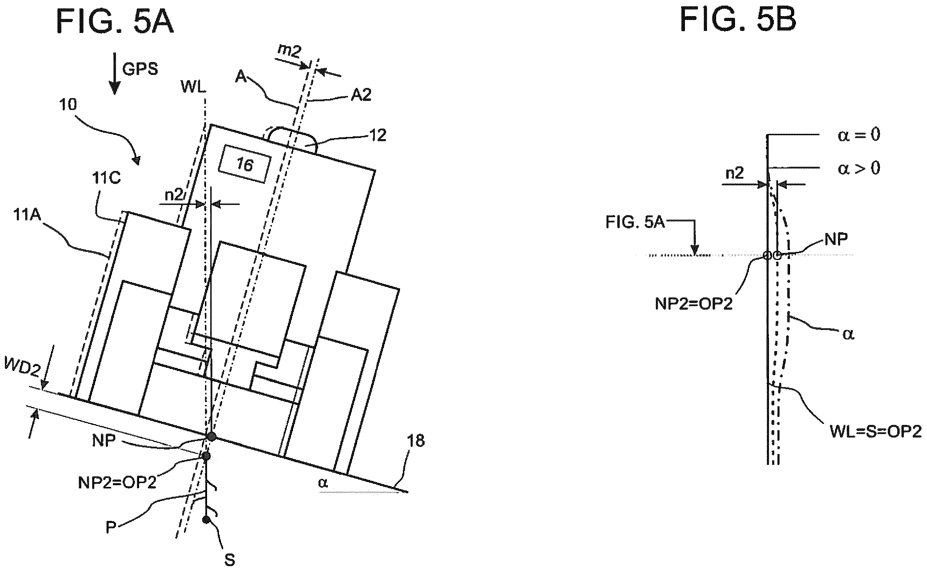

In a second subsequent operation depicted with FIG. 5A at the same geographic position as shown in FIG. 4A, but with a new working depth WD2 corresponding to operating point OP2. The new working depth WD2 is still below, but closer to, the ground surface 18 and may be used, for example, for operating a harrow or similar implement to work the soil. The plant P is illustrated in FIG. 5A with a growth level approximately matching working depth WD2 at operating point OP2. The application of the new working depth WD2 results in an offset of navigation point NP along axis A, wherein navigation point NP2 is used to guide the vehicle along the same wayline WL used in the previous operation shown in FIG 4A. When using the offset navigation point NP2 to guide the vehicle 10 along wayline WL (indicated with a vertical line), the vehicle 10 is shifted laterally along the ground surface 18 to position 11C (corresponding to position A2 of the vertical axis) compared to the position 11A (corresponding to position A of the vertical axis) when ground based navigation point NP is considered. As shown in FIG. 5B with a view indicated by arrow GPS in FIG. 5A, by offsetting the navigation point NP2 and using this reference point to guide the tractor 10 along the predetermined wayline WL corresponding to the position of seed S and plant P, the ground based navigation point NP is only aligned with wayline WL on even surface. With increasing slope $\alpha$, ground based navigation point NP diverges from wayline WL (indicated with distance n2 for NP2) and moves towards WL when slope $\alpha$ is reduced. The same applies to the position 10.2 of the vehicle which moves away from the position 10.0 in a downhill direction with increasing slope angle $\alpha$. The geographic position shown in Figure Fig. 5A is depicted with a horizontal line at NP2/OP2 in Fig. 5B.

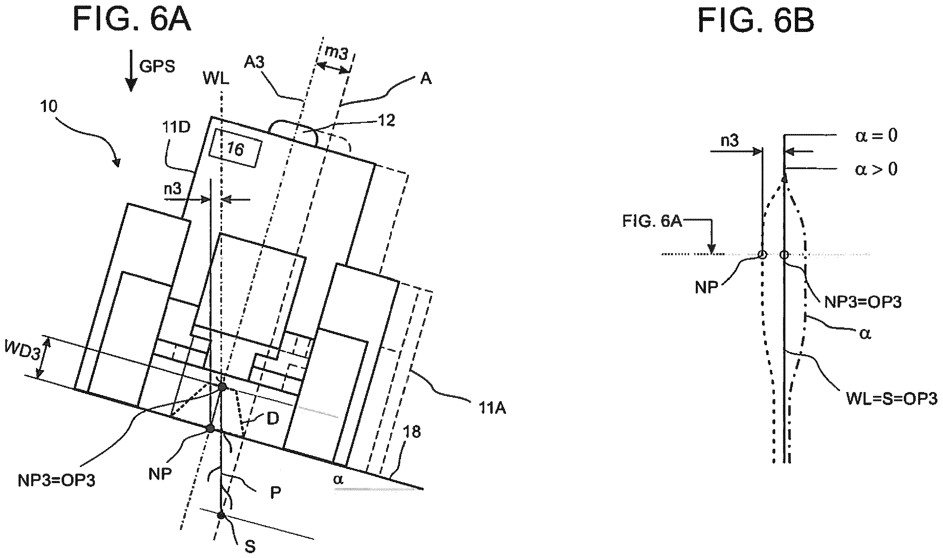

In a third subsequent operation depicted in FIG. 6A at the same geographic position as shown in FIG 4A and 5A, a further working depth WD3 (corresponding to new operating point OP3) is used by the working depth compensation system. The working depth WD3 approximately corresponds to the top of a soil dam D and is located above ground surface 18. The new working depth WD3 results in a new navigation point NP3 that, when used by the machine 10 to guide the machine 10 along wayline WL, shifts the vehicle 10 laterally in an uphill direction to position 11D (corresponding to position A3 of the vertical axis). It should be noted that the navigation point NP3 still corresponds to wayline WL used in in the previous operations depicted in FIGS. 4A and 5A.

As shown in FIG. 6B with a view indicated by arrow GPS in FIG. 6A, the curve on which ground navigation point NP travels with reference to wayline WL (and seed position S) is on the left side of WL indicating a working point OP3 above ground. The geographical position shown in Fig. 6A is depicted with a horizontal line at NP3/OP3 in Fig. 6B.

The working depth compensation shown in FIGS. 6A and 6B may be used to ensure that a soil dam D for planting asparagus is created with plant P breaking through at the top surface (parallel to soil surface 18) of the soil dam D rather than through a side of the dam D as shown in FIG. 2. This eases harvesting and further processing.

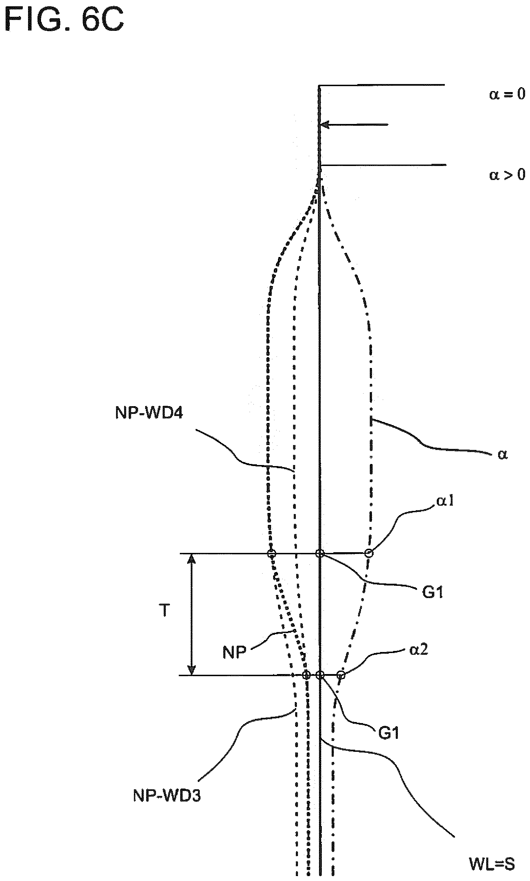

In the example illustrated in FIGS. 4A-6B, the initial stage was provided with an offset of the navigation point NP1 based on working depth WD1 as shown in FIG. 4A. Furthermore, the working depth compensator may provide the correction of the navigation point for subsequent operations by considering actual working depth, determining actual slope $\alpha$ during driving along the wayline and dynamically calculate and adjust the navigation point on the fly. Alternatively the working depth compensator may determine an adjusted navigation point in advance by recording slope $\alpha$ during an initial operation and calculating the adjusted navigation point depending on working depth for at least the next wayline (and each waypoint associated with the wayline) for subsequent operations as an off-line path planning procedure. Alternatively, the working depth compensator may receive data regarding slope $\alpha$ for import by map data. Furthermore, in the above described embodiment, the working depth compensator considered subsequent operations with constant working depth, so that the correction of the navigation point simply depends on the change of slope $\alpha$ during said operation. However, the working depth compensator may consider simultaneous changes to both parameters slope $\alpha$ and working depth WD. Again, due to the nature of some agricultural operations, this requires a smooth change in working depth to avoid abruptly offsetting the navigation point and, as a consequence, abrupt lateral offsets to the vehicle travel path which would not be feasible for most agricultural operations, including operations involving an implement working the soil. This is depicted in FIG. 6C with a view indicated with arrow GPS in FIG. 6B wherein a first curve (indicated with NP-WD3) represents the offset of ground based navigation point NP with constant working depth WD3 shown in FIG. 6B and a second curve (indicated with NP-WD4) represents the offset of ground based navigation point NP with constant further working depth WD4. With reference to FIG. 6A but not shown therein, the working depth WD4 is smaller compared to WD3 but still above ground surface 18. In this subsequent operation, the working depth is changed from working depth WD3 when the vehicle passes geographical position G1 to WD4 at geographical position G2 while simultaneously the slope $\alpha$ changes from first slope $\alpha1$ (at G1) to $\alpha2$ (at G2) along wayline WL. As a consequence, the curve representing the position of the ground based navigation NP shows a transition area T in which the distance to WL is influenced by the simultaneous changes in working depth WD and slope $\alpha$.

One advantage of the embodiment of the invention described above is that a machine performing a multiple operations on a crop growing on sloped terrain can use a single wayline (or set of waylines) for each operation, even though the actual position of the machine performing the operation may shift laterally relative to the wayline to accommodate changes in the operating point of the various operations. This is possible because the system adjusts the location of the machine's navigation point (rather than the wayline) according to the working depth and the ground surface slop angle. Thus, the machine's guidance system does not need to store different waylines for different applications that require varying working depths, or for different machines with different working depth settings. The guidance system always works with one set of waylines in terms of the absolute geographical position. This requires less storage and computational capacity and enables the transfer of waylines to different applications/machines even when working depth varies.

In a second embodiment of the invention the working depth compensator adjusts a wayline and waypoints associated with the wayline that are used for guiding the vehicle, wherein adjustments to the wayline are based on a working depth and the ground surface slope angle $\alpha$. This embodiment differs from the first embodiment, described above, in that when using this second embodiment the waylines (associated with the crop or field) are adjusted rather than the navigation point (associated with the machine). While this embodiment of the invention may result in multiple different waylines being used over time on the same crop or field, it may be desirable or advantageous in some circumstances. Some machine guidance systems, for example, may not import or export waylines and/or may simply generate waylines on-the-fly based on an initial path manually driven by an operator. These systems would not benefit from sharing common waylines for subsequent operations.

Further waylines (e.g. parallel A-B or contoured waylines) are travelled accordingly. For clarity reasons the subsequent operations are explained by just depicting one single wayline being part of a set of waylines which are not shown but which may be necessary to work a complete field

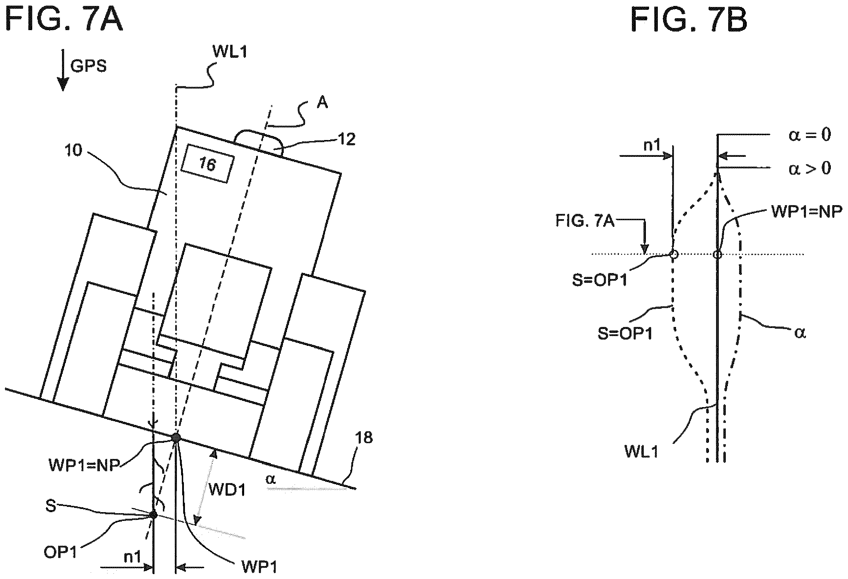

FIG. 7A illustrates an agricultural machine 10 on a field with a ground surface 18 which is at least partly sloped according to an angle $\alpha$. During an initial first operation, the working depth compensator records the slope $\alpha$ and the working depth WD1 corresponding to a current operating position OP1 and the machine records or follows wayline WL1 using the ground based navigation point NP at the geographic position depicted in FIG. 7A. The waypoint WP1 corresponds to the intersection of wayline WL1 and ground surface 18 such that it matches the ground based navigation point NP which is also determined on ground surface 18. It will be appreciated, however, that wayline point WP1 (or any subsequent waypoint) could be moved to any vertical position along wayline WL1 without influencing the positioning of vehicle 10 as the positioning is provided in the two-dimensional view indicated with arrow GPS, so that the vertical position of wayline point WP1 is not relevant. Therefore, the offset of any subsequent wayline is only determined by a horizontal offset while in the figures, the waypoint must be seen as a virtual point and is drawn on the ground 18 to match with navigation point NP.

The wayline WL1 may be either stored or imported for use during this initial first operation. Slope $\alpha$ and the working depth WD1 may then be recorded during initial driving or included in the imported or stored map data.

With reference to FIG. 7B showing the view in the reference plane used in satellite navigation and indicated by arrow GPS in FIG. 7A, the initial operation uses wayline WL1. The geographic position of the machine 10 shown in Figure FIG. 7A is depicted in FIG. 7B by a horizontal line at WP1/OP1. With increasing slope $\alpha$ (dramatically depicted by curve $\alpha$ rotated onto drawing plane), seed point S and operating point OP1 diverge from wayline WL1. Similarly, seed point S and operating point OP1 move toward WL1 as slope $\alpha$ decreases. Thus, on sloped terrain the location of the row of sees does not correspond to the wayline WL1.

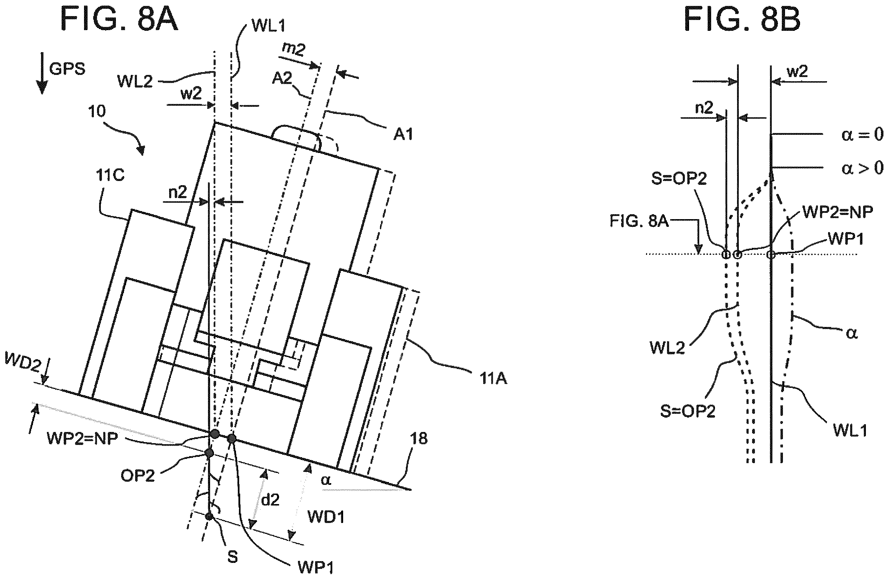

In a second subsequent operation depicted in FIG. 8A at the same geographic position as shown in FIG 7A, a new working depth WD2 (or operating point OP2) is considered which is below ground surface 18, e.g. as used for operating a harrow or similar implement at or near the ground surface 18. According to this embodiment of the invention, and in contrast to the first embodiment described above corresponding to FIGS.5A and 5B for the same parameters, the working depth compensator of the guidance system 16 is uses the same ground based navigation point NP for different operations but determines a new wayline WL2 for each operation according to working depth WD and slope $\alpha$. The machine's guidance system 16 uses the wayline WL2 for guidance by steering the machine 16 so that the ground based navigation point NP follows the wayline WL2. The new wayline WL2 may be determined using one or more virtual waypoints, such as virtual waypoint WP2 (FIG. 8A), and an initial waypoint WP1. As mentioned above, the vertical positions of waypoint WP1 and waypoint WP2 are not relevant for navigation but are shown on ground surface 18 to illustrate how they correspond to navigation point NP.

The wayline offset w2 to the initially recorded or used wayline WL1 or virtual waypoint (depicted with WP1) is determined in the horizontal direction by the equation:

$$w2 = d2 \times \sin(\alpha)$$

Wherein d2 is the distance between the initially considered operating point OP1 (or seed position) and operating point OP2 of the subsequent operation, perpendicular to ground 18. In FIG. 8A, the distance D2 can be calculated by subtracting the working depth WD2 from the working depth WD1:

$$d2 = WD1 - WD2$$

The horizontal position of wayline WL2 (depicted by virtual wayline point WP2) is determined by applying a horizontal offset w2 to the wayline WL1 (depicted by virtual point WP1) as the vertical offset of WP2 compared to WP1 is not relevant. The application of the offset w2 results in the vehicle 10 shifting laterally along the ground surface 18 to position 11C (corresponding to axis A2) from position 11A (indicated by broken lines) when wayline point WP1 is considered. As shown in FIG. 8B the curve followed by waypoint WP2 is only aligned with wayline WL1 on level ground surfaces. The geographic position of the machine 10 shown in Figure FIG. 8A is depicted with a horizontal line at WP2/OP2 in FIG. 8B. With increasing slope $\alpha$ (dramatically depicted with a curve $\alpha$ rotated onto drawing plane), wayline point WP2 and wayline WL2 diverge from wayline WL1, and move towards WL1 as slope $\alpha$ decreases. The same applies to the curve on which the operating point OP2 (seed location S) moves relative to wayline WL1. Again also the position 11C of the vehicle moves away from the position 11A with increasing slope $\alpha$. Generally the adjustment of the wayline or waypoints is a continuous, smooth process (as slope $\alpha$ is also continuously changing) without abrupt adjustments or offsets as that would cause undesired abrupt lateral shifts of the vehicle which are not feasible for most agricultural operations, such as operations involving an implement working the soil.

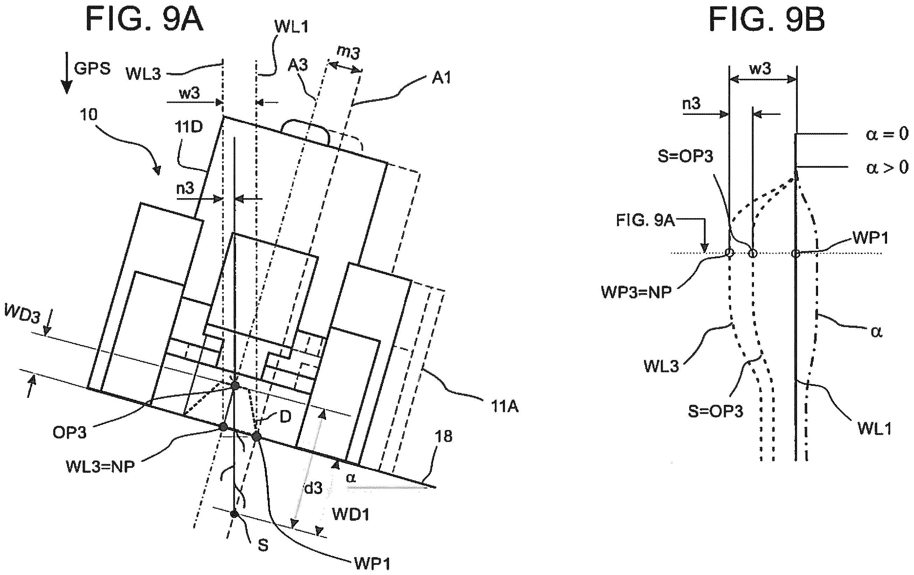

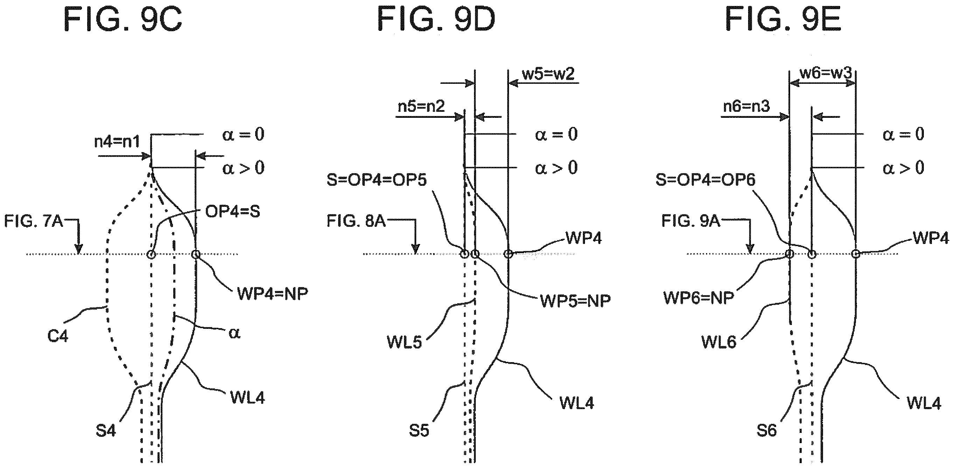

A third subsequent operation is depicted in FIG. 9A at the same geographic position as shown in FIGS. 7A and 8A, wherein another working depth WD3 (corresponding to operating point OP3) is used. The working depth WD3 is located above the ground surface 18 and corresponds to the top and center of a soil dam D. The working depth compensator of the guidance system 16 uses the ground based navigation point NP and determines a new wayline WL3 calculated from the working depth WD and slope $\alpha$. The guidance system 16 guides the machine 10 such that the navigation point NP follows the wayline WL3. The new wayline WL3 may be determined using one or more virtual waypoints, such as virtual waypoint WP3 (FIG. 9A), and an initial waypoint WP1.

The wayline offset w3 from the initially recorded or used wayline WL1 or virtual waypoint (depicted as WP1) is determined in horizontal direction by the equation:

$$w3 = d3 \times \sin(\alpha)$$

Where d3 is the distance between the initially considered operating point OP1 (or seed position S) and operating point OP3 in a direction perpendicular to ground surface 18. In FIG. 9A, the distance d3 can be calculated as the sum of the working depth WD3 and the working depth WD1:

$$d3 = WD1 + WD3$$

The horizontal position of wayline WL3 (depicted by virtual waypoint WP3 in FIG. 9B) is determined by applying a horizontal offset w3 to the wayline WL1(depicted by virtual point WP1) as the vertical offset of WP3 compared to WP1 is not relevant for guidance purposes. The application of the offset w3 to the wayline used by the machine 10 results in the position of the vehicle 10 shifting laterally in an uphill direction along the ground surface 18 to position 11D (corresponding to the vertical axis of the vehicle 10 located at A3) in contrast to position 11A indicated with broken lines (corresponding to the vertical axis of the vehicle 10 located at A1) when waypoint WP1 is used. As shown in FIG. 9B with the view in the reference plane used in satellite navigation and indicated with arrow GPS in FIG. 9A, the curve on which wayline point WP3 travels is only aligned with wayline WL1 on level ground surfaces. The geographical position of the machine 10 shown in Figure Fig. 9A is indicated in FIG. 9B with a horizontal line at WP3/OP3. With increasing slope $\alpha$ (dramatically depicted with a curve $\alpha$ rotated onto drawing plane), waypoint WP3 and wayline WL3 diverge from wayline WL1. Similarly, WP3 and WL3 and move towards WL1 as slope $\alpha$ decreases. The same applies to the curve on which the operating point OP3 (seed S) moves relative to wayline WL1. Again also the position 11D of the vehicle moves away from the position 11A as slope $\alpha$ increases.

The working depth compensation shown in FIGS. 9A and 9B may be used to form soil dam D. In the illustrated embodiment, the subsequent waylines WL2 and WL3 were both determined based on WL1, which was stored during an initial operation. Alternatively, any subsequent wayline (or waypoint), such as WL3 shown in FIGS. 9A and 9B, may be determined by applying an offset or adjustment to the previously-used wayline (e.g., WL2 shown in FIGS. 8A and 8B) using equations set forth above or similar techniques. Alternatively the working depth compensator may provide the offset or adjustment to the wayline in advance by recording slope $\alpha$ during an initial operation (or using map data) and calculating the offset or adjustment to subsequent waylines according to the working depth for at least the next wayline (and each waypoint on the wayline) for subsequent operations as an off-line path planning procedure, which may be completed prior to the machine 10 entering or working the field.

With reference to FIGS. 9C-9E, the second embodiment of the invention may be adapted to provide a similar result as the first embodiment in that the seed location S or operating point may always be on a straight line (in the plan or GPS view) independent of any ground surface slope. As best seen in FIGS. 7B, 8B, 9B as the waylines WL1, WL2, and WL3 are straight A-B type waylines, the initial stage would result in seeds being placed along a curve S and not in a straight line (in terms of the GPS coordinate system). To mitigate this problem, the working depth compensator may be adapted according to embodiments of the invention and as shown in FIG. 9C. In this case, the ground surface slope must be known to adapt the wayline WL 4 so that seeds (indicated by S) are placed in a straight line (in the plan or GPS view). FIG. 9C shows the seed path S of FIG. 7B indicated by C4. If a seed path S4 must be a straight line, the wayline WL4 is offset as needed so that the path S4 remains straight. Thus, at the geographical position indicated in FIG. 7B, an offset n5 would be provided (relative to WL1 of FIG. 7B). Stated differently, the seed line S of FIG. 7B is mirrored (about an axis corresponding to the wayline WL1 on an unsloped surface) to receive new wayline WL4. Applying the offset n4 (which corresponds to N1 of FIG. 7B) based on the slope $\alpha$ to compensate for deviations resulting from working depth WD1 (applied also in FIG. 9C), the seed path S4 forms a straight line. As shown with FIG. 9D to 9E, any subsequent operation starts from wayline WL4 and the working depth compensator applies new offset values depending on the working depth WD5, WD6 and slope $\alpha$ so that similar to FIG. 8B and 9B, an offset w5 (which is the same value as w2 in FIG. 8B) and w6 (which is the same value as w3 in FIG. 8B) is calculated similar to w2 and w3. In contrast to FIGS. 8B and 9B, however, these offsets are applied from the curved initial wayline WL4 so that waylines WL5 and WL6 present different shapes while the seed path remains on the same straight line S. Again, the offsets n4, n5, n6 of the ground based navigation point NP compared to operating points OP4, OP5, OP6 present the same values as n1, n2 and n3 of Figures 7A,7B, 8A, 8B, 9A, 9B but are offset from an initially curved line. As previously discussed, the working depth compensator can work with any shape of wayline, whether straight or curved.

In the above-described embodiments, the working depth compensator assumes that the working depth remains constant or nearly constant as the machine 10 performs an operation, such that the adjustment of reference points (e.g., waypoints or navigation points) depends only on the ground surface slope $\alpha$ during said operation. The invention is not so limited, however. In other embodiments of the invention the working depth compensator is configured to determine an offset or adjustment to reference points (e.g., waypoints or navigation points) by simultaneously considering changes to two parametersthe ground surface slope α and the working depth WD. This may be done using the following equation:

$$w(n) = d(n) \times \sin(\alpha)$$

wherein both parameters d (being the distance of operating point with changing working depth) and slope angle α may be continuously changing.

Comparing FIGS. 4A/4B (illustrating the first embodiment of the invention wherein the navigation point NP is adjusted) with FIGS. 7A/7B (illustrating the second embodiment of the invention wherein the wayline WL is adjusted), wherein the same agricultural operation is performed based on the same working depth WD1 and the same slope angle α, it can be seen that the offset of the ground based navigation point NP relative to the operating point OP1 is the same (distance n1) in both embodiments of the invention. That is also true when comparing distance n2 for operating point OP2 (described in FIGS. 5A/5B and 8A/8B) and distance n3 for operating point OP3 (described in FIGS. 6A/6B and 9A/9B), even if the derivation (shown with the curves e.g. in FIG. 4B, 5B, 6B and 7B, 8B, 9B) are different. Thus, independent of the method applied, the distances n1, n2, n3 are equal, which means that when the same working depth WD and slope α are considered, the lateral position of the vehicle (defined by the navigation point NP being the intersection between vehicle axle A and ground surface 18) is the same relative to the . If in both embodiments, shown in FIG. 4A and 7A the initial operation is started with the ground based navigation point NP to guide the machine 10 and offsets are only provided for the subsequent operations (and not at the initial operation such as shown in FIG. 4A), the lateral position of the machine 10 on the ground surface 18 relative to the operating point OP is the same independent of whether the working depth compensator adjusts the navigation point NP or the wayline WL. In other words, the machine 10 would use the same traffic lane for the operation regardless of whether the first embodiment of the invention (which adjusts the vehicle's navigation point) or the second embodiment of the invention (which adjusts the wayline) is used.

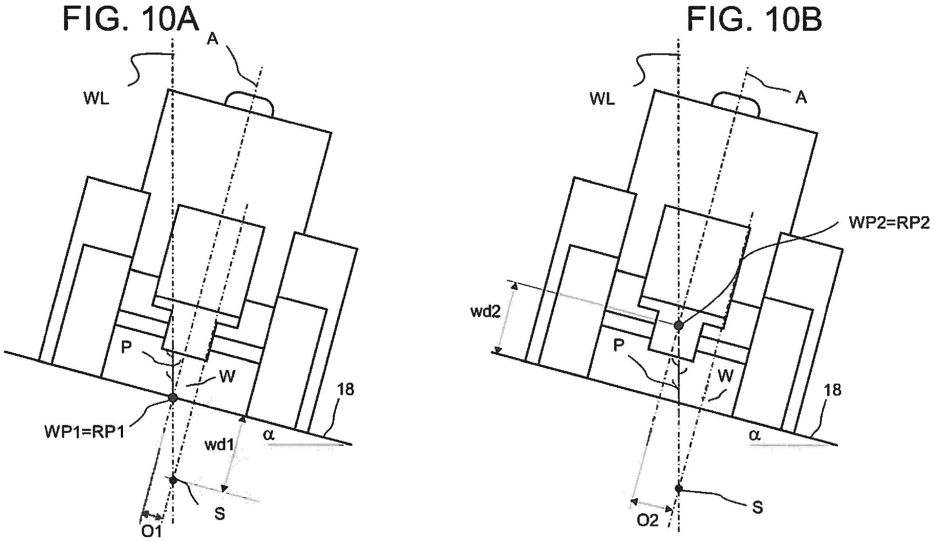

Furthermore, various different approaches may be used to determine the offset of the wayline WL. The offset w described in FIGS. 7A-9B represents the horizontal offset of the wayline (and associated waypoints). Alternatively, wayline can be adjusted using on offset value along ground surface 18. As illustrated in FIGS. 10A and 10B, the machine 10 is driven along a terrain comprising a ground surface 18 that is sloped according to an angle α. Also shown labeled in FIGS. 10A and 10B are a plant (P), weeds (W), and a seed (S). Certain embodiments of a working depth compensator compute reference points, such as waypoints, based on a recorded working depth and the slope angle α. More particularly, and referring to FIGS. 10A-10B, the computing system 16 records the working depth, wd1 (e.g., the seeding depth from the soil surface 18 to S) of a seeding operation while driving (e.g., via auto-guidance) along a given path during the seeding operation, that path indicated by the dashed line depicted to the right of and parallel with the axis A. The slope angle α, may be accessed from local memory of the computing system 16 or via communication functionality to a remote data structure that stores map data of one or more farms. The system 16 uses the slope angle to compute an offset O, necessary to provide a reference point, RP (in fact, a plurality of waypoints to guide the machine 10). In one embodiment, the offset O for the new waypoint (for a subsequent stage of operations) is computed according to the following formula:

$$O = d \,/\, \cot(\alpha) \qquad\qquad\qquad \text{(Eqn. 1a)}$$

or

$$O = d \times \tan(\alpha) \qquad\qquad\qquad \text{(Eqn. 1b)}$$

where for FIG. 10A, the offset is O1 for RP1 (=WP1) and d = d1, and for FIG. 10B, the offset is 02 for RP2 (=WP2) and d = wd1+ wd2 (where wd2 is a working height). The reference point(s) may match a plant P position (FIG. 10A) or be above (FIG. 10B) the soil surface 18 and the plant P for the subsequent operation. That is, the system 16 determines a path plan based on the offset, O (e.g., O1 or 02), and depending on the working depth (d1 to the soil surface) or height (wd1 + wd2 above the soil surface) of the subsequent operation, the reference point matches WP1 =RP1 (FIG. 10A) or WP2=RP2 (FIG. 10B). In one embodiment, the reference point RP2 (FIG. 10B) depends on acquired knowledge of the height wd2. For instance, an operator may enter at a user interface the value for wd2, or this value (and the depth, wd1) may be provided automatically by the implement (e.g., implement controller or sensor) forwarding settings via ISOBUS to the computing system 16.

The embodiments of the invention described above apply corrections to the navigation point NP on the vehicle or to the wayline WL (or waypoints) such that the machine 10 is operated at a lateral offset along ground 18 during subsequent operations. In other words, the machine 10 is uses varying traffic lanes for subsequent operations. This may not be acceptable for some agricultural operations. For example, Controlled Traffic Farming (CTF) employs the principle that a small number of traffic lanes (preferably one for each swatch) on the field is permanently used for multiple operations even with different machines so that excessive soil compaction (impairing soil health and crop growth) is reduced to a limited area of the field. Similarly, crop cultivation in narrow rows may prevent a machine path being offset in a subsequent operation, such as in grape production where only small tractors can pass on one traffic lane between the rows of grapevine and attempting to laterally offset the machine path from one operation to another would cause damage to the grapevines.

In a third embodiment of the invention, the working depth compensator uses the wayline (and the waypoints defining the wayline) determined or used in an initial operation (or otherwise determined, e.g., by importing map data) and the navigation point on the vehicle used in the initial operation for geographic positioning of the vehicle in all subsequent operations. Thus, the machine 10 operates without a lateral offset along ground 18 during subsequent operations and uses the same traffic lane. To address the problem of geotropism as described above, the working depth compensator according the invention provides a correction of the reference point on the implement towed by or mounted on an agricultural machine.

As the initial first operation can be similar to the operations illustrated in FIG. 4A or 7A, reference is made to FIG. 7A. An agricultural machine 10 is operated on a field with a ground surface 18 which is at least partly sloped, with FIG. 7A depicting the machine on a slope according to an angle $\alpha$. During this initial first operation, the working depth compensator records the slope $\alpha$ and the working depth WD1 referring to current operating position OP1 while the machine is guided along wayline WL1 using the ground based navigation point NP at the geographic position depicted in FIG. 7A.

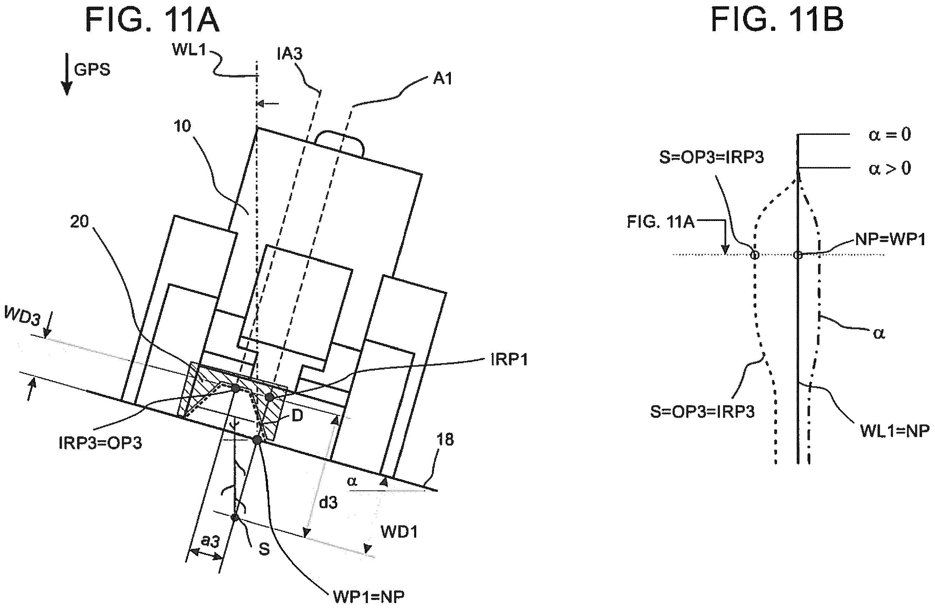

In a second subsequent operation depicted in FIG. 11A, working depth WD3 (or operating point OP3) is considered which is above ground surface 18. This subsequent operation may be, for example, forming a dam D with a dam former 20 attached to machine 10 and is identical to the operation described in FIG. 9A, so the same numerals are used. In contrast to the embodiment described in FIG. 9A, however, the working depth compensator of the guidance system 16 uses ground based navigation point NP and wayline WL1 (or waypoint WP1) of the initial operation without applying any offset.

According the third embodiment of the invention, instead the reference point on the implement, referred to as implement reference point (IRP3), is offset from a first implement reference point IRP1. The first implement reference point IRP1 is aligned with the center axis A1 of the machine 10, and the reference point IRP3 is laterally offset from the center axis A1. This implement offset a3 is provided on the machine 10, e.g., by lateral movements of a linkage system (not shown in FIG. 11A) or parts thereof so that the implement is completely or partially laterally shifted. Alternatively, the offset may be provided on the implement by a hydraulic cylinder for lateral adjustment of the dam forming tool relative to the implement frame which attaches to the machine 10.

The implement offset a3 from the center axis A1 or implement reference point IRP1 (used without lateral offset) is determined along ground 18 by the equation:

$$a3 = d3 \times \tan(\alpha)$$

Where d3 is the distance between the initially considered operating point OP1/ (or seed position) and operating point OP3 perpendicular to ground 18. In FIGS. 9A and 11A, the distance d3 can be calculated by summing the working depth WD3 and the working depth WD1:

$$d3 = WD1 + WD3$$

The application of the offset a3 results in the implement 20 (including the dam forming tool) moving laterally along the ground surface 18 as indicated with to IA3. As shown in FIG. 11B with the view in the reference plane used in satellite navigation and indicated with arrow GPS in FIG. 11A, the navigation point NP is always aligned with wayline WL1 independently of slope $\alpha$. The geographic position of the machine 10 shown in Figure Fig. 11A is depicted with a horizontal line at IRP3/OP3 in FIG. 11B. As slope $\alpha$ increases (dramatically depicted by a curve $\alpha$ rotated onto drawing plane), operating point OP3 and IRP3 (seed position S) shifts relative to wayline WL1. The position of the implement 20 moves away from the machine axis A1 as slope $\alpha$ increases.

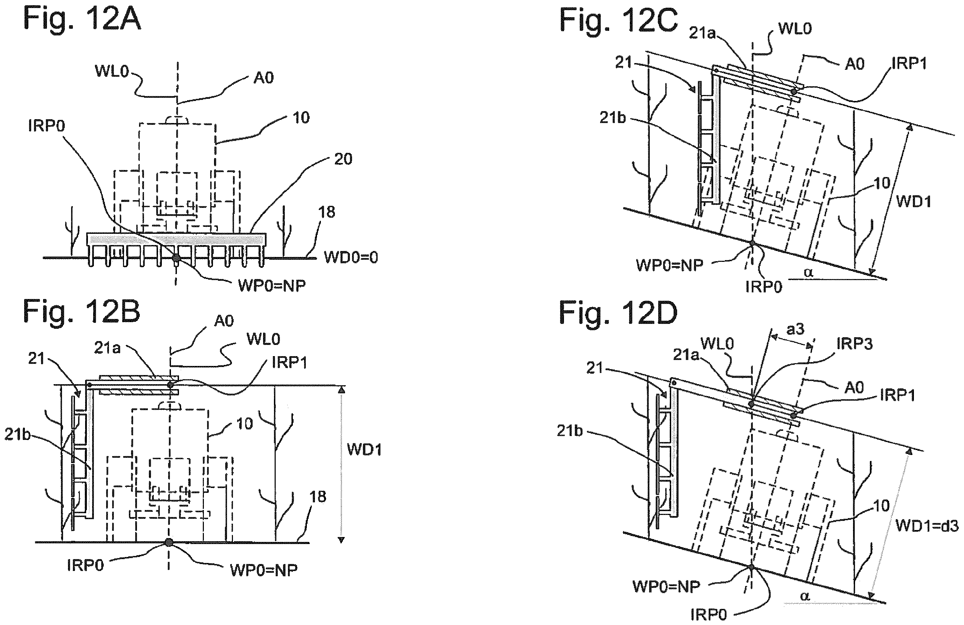

Another application for the third embodiment of the invention is illustrated in FIGS. 12A-12D for grape production operations. In an initial operation shown in FIG. 12A a first implement 20, such as a harrow, is used to work the ground. The ground based navigation point NP (corresponding to the intersection between ground surface 18 and center axis A0 of the machine 10) is used to record wayline WL0 (indicated by waypoint WP0). The implement reference point IRP0 defines the position of implement 20 relative to the towing machine 10 during initial operation.

In a subsequent operation shown in FIG. 12B, the machine 10 uses the same wayline WL0 and the same ground based navigation point NP as in the first operation illustrated in FIG. 12A, but uses a different implement 21. The implement 21 operates at a higher level over the ground surface 18 and thus has a greater working depth WD1 and a new implement reference point IRP1. The implement 21 (and other implements used during subsequent operations) may be a leaf cutter or a leaf blower to remove leafs so that the sun can reach each of the grapes. Generally such an implement may be provided with lateral positioning means 21a, such as a hydraulic cylinder, to laterally offset implement tools such as cutting knives attached to a support 21b. The lateral offset may be manually entered by the driver prior to the operation to adjust the tools relative to the position of the grapevines depending on different growth stages and patterns of the grapevines. Challenges arise when the ground surface 18 is sloped. As shown in FIG. 12C, the machine 10 and implement 21 are operated on sloped ground which is common for vineyards. Even if parts of the implement 21, such as the support 21b, can be pivoted for angular adaption to slope $\alpha$, the relative position to the grapevine is incorrect due to the effect of geotropism and slope. So the driver is forced to manually adapt the position of tool support 21b by adjusting lateral position means 21a. When slope changes, the driver has to readjust again which can be fatiguing over time. According to embodiments of the invention, the working depth compensator adjusts the implement reference point on the vehicle or implement depending on the working depth and slope.

With reference to FIG 12D, the offset a3 of the implement reference point IRP3 with regard to implement reference point IRP1 (used without lateral offset) is determined (parallel to ground surface 18) by the equation:

$$a3 = d3 \times \tan(\alpha)$$

Where d3 is the distance between the implement reference point IRP1 and the implement reference point IRP0 used for initial operation perpendicular to ground surface 18:

$$d3 = WD1$$

The application of the offset a3 results in the implement 21 including tool support 21b shifting laterally parallel to the ground surface 18.

As a result, the position of the tool relative to the grapevine is automatically and continuously adjusted depending on the slope of the ground surface 18. The working depth compensator may be configured to assume a constant working depth, or may be configured to adjust the implement reference point IRP according to changes in both parameters slope $\alpha$ and working depth WD using the equation

$$a(n) = d(n) \times \tan(\alpha)$$

Where both depth d and slope angle $\alpha$ may be continuously change.

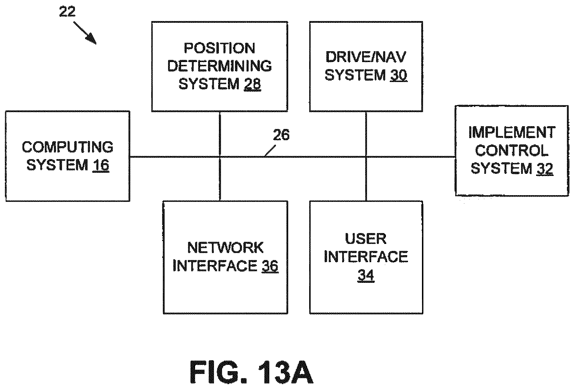

Attention is now directed to FIG. 13A, which illustrates an embodiment of a control system 22 used in an embodiment of a working depth compensator. It should be appreciated within the context of the present disclosure that some embodiments may include additional components or fewer or different components, and that the example depicted in FIG. 13A is merely illustrative of one embodiment among others. The control system 22 comprises a computing system 16 comprising one or more computing devices or electronic control units (ECUs). In one embodiment, the working depth compensator may include all of the components depicted in FIG. 13A, or a subset thereof (e.g., the computing system 16 only). Note that the computing system 16 is depicted as a component of the control system 22 residing in the machine 10, all or a portion of the functionality of the computing system 16 may be implemented remotely from the field to be farmed or at least external to the machine 10 or distributed among the machine and any one or combination of a towed implement and a remote computing device or devices. The computing system 16 is described hereinafter (with exceptions where noted) as a component of (e.g., hosted by) the machine 10, with the understanding that all or a portion of the computing system functionality may be distributed among plural devices and/or located remotely or otherwise external to the machine 10 in some embodiments. The computing system 16 is coupled to one or more networks, such as a network 26, which in one embodiment may comprise a controller area network (CAN) bus(es), such as implemented according to the ISO 11783 standard (also referred to as "ISOBUS") and using a J1939 messaging protocol. In some embodiments, the network 26 may be configured according to one or more other industry and/or proprietary communication specification or standards, and is not limited to a single network. Also coupled to the network 26 is a position determining system 28 (e.g., which may be embodied as the above-described GNSS receiver assembly 12, FIG. 4A), a drive/navigation (Drive/Nav) system 30, an implement control system 32 (e.g., an electronic control unit (ECU) dedicated to controls/settings for a coupled implement), a user interface 34, and a network interface 36. In some embodiments, functionality of one or more of the components may be combined into a single unit, (e.g., functionality of the implement control system 32 may be embodied in the computing system 16).

In one embodiment, the position determining system 28 comprises a GNSS receiver and an antenna to enable autonomous or semi-autonomous operation of the machine 10 in cooperation with the drive/navigation system 30 and the computing system 16 (e.g., via auto-guidance software residing in the computing system 16). In some embodiments, the position determining system 28 may comprise plural GNSS receivers and/or plural antennas. The position determining system 28, alone or in cooperation with the network interface 36, may also comprise functionality for receiving signals from one or more public and/or proprietary differential correction sources, including DGPS radio beacons, Space-Based Augmentation Systems (SBAS), L-Band, RTK, etc.

The drive/navigation system 30 collectively comprises controls for the various power drive, gearing (e.g., transmission), and/or steering functionality, including actuators (e.g., hydraulic actuators, including proportional electrohydraulic valves, electromagnetic actuators, etc.), sensors (e.g., steering angle sensors), and/or control subsystems (e.g., based on electrical or electronic, pneumatic, hydraulic mechanisms) residing on the machine 10, including those used to control machine navigation (e.g., speed, direction (such as a steering system), etc.), among others.

The implement control system 32 comprises the controls (e.g., actuators, switches) for the various valves, pumps, flowmeters, and/or control subsystems residing on the machine 10 to cause dispensing of product (e.g., chemicals, water, etc.) from the machine 10, as well as to cause control operations (e.g., turn on/off, proportional control, sectional control, etc.), including positioning, of the coupled implement, such to change height position and/or orientation (e.g., folding), and/or directional (e.g., independent steering) control. The implement control system 32 may, alone or in cooperation with the computing system 16, control the various operational functions of the implement. The implement control system 32 also control lateral position means 21a shown in FIGS 12B to 12D

The user interface 34 may comprise any one or a combination of a keyboard, mouse, microphone, touch-type or keyboard/mouse/voice controlled display screen, headset, joystick, multifunctional handle (e.g., to enable nudge commands), steering wheel, or other devices (e.g., switches) that enable input by an operator and also enable monitoring and/or feedback to an operator of machine operations. Note that in some embodiments, the user interface 34 may be implemented remotely from the machine 10 or integrated with the computing system 16 in some embodiments.

The network interface 36 comprises hardware and software that enables remote control and/or monitoring of the machine 10 and its associated operations. For instance, the network interface 36 may comprise a radio and/or cellular modem to enable connectivity with other devices of one or more networks, including a cellular network local area network, the Internet, and/or a local network. Internet connectivity may be further enabled using interface software (e.g., browser software) in the computing system 16. For instance, the computing system 16 may cause the network interface 36 to access map data from a remote server device to determine a slope of a field to be worked. As indicated above, at least some of the functionality of the network interface 36 (or other components of the control system 22) may be integrated into the computing system 16 or other components of the control system 22 in some embodiments.

The computing system 16 is configured to receive and process information from, and in some cases output data to, the components of the control system 22. For instance, the computing system 16 may receive operator (or other user) input from the user interface 34, such as a working height (e.g., above ground) for determining reference points for a subsequent operation. As another example, the computing system 16 may receive working depth information from the implement control system 32 to determine reference points for a subsequent operation. The computing system 16 may receive input from the position determining system 28 that includes updated position information from the machine 10 (based on satellite data and optionally differential correction signal information). The user interface 34 may cooperate with the computing system 16 to enable operator intervention of machine operations, enable auto-guidance, facilitate generation of waylines (via starting and ending recording of AB paths, contour paths, etc.), retrieval of past waylines, and/or access of machine and/or field/map data. In some embodiments, the computing system 16 may receive input from the position determining system 28 and the implement control system 32 (e.g., to enable feedback as to the position or status of certain devices, such as an implement height and/or orientation and/or articulation angle, direction of the machine 10, direction or angle of a towed implement relative to the machine 10, etc.). The computing system 16 may also access a local or remote data structure to use data to enable path planning or corresponding operations, including map data for terrain slope angle values. The data structure may reside at a remote location (e.g., accessed via the network interface 36) or locally, such as from a storage device (e.g., memory stick, memory, etc.).

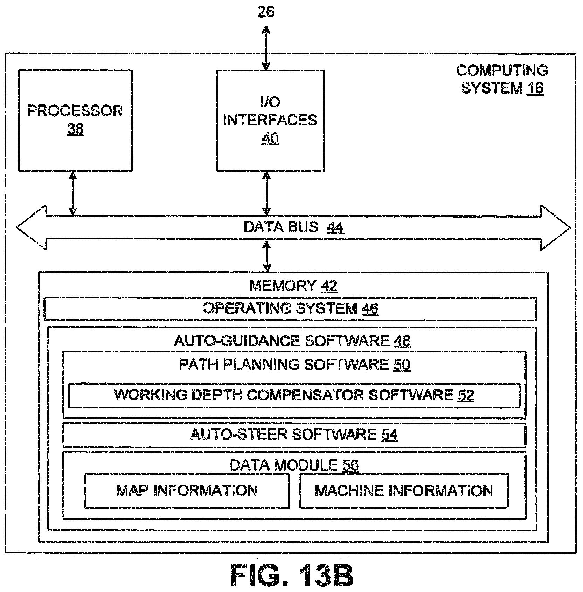

FIG. 13B further illustrates an embodiment of the example computing system 16. One having ordinary skill in the art should appreciate in the context of the present disclosure that the example computing system 16 is merely illustrative, and that some embodiments of computing systems may comprise fewer or additional components, and/or some of the functionality associated with the various components depicted in FIG. 13B may be combined, or further distributed among additional modules, in some embodiments. As indicated above, the computing system 16 may comprise plural (e.g., networked) devices (e.g., plural ECUs) in some embodiments, but for purposes of brevity, the computing system 16 is described in association with FIG. 13B as a single device. It should be appreciated that, though described in the context of residing in the machine 10, in some embodiments, the computing system 16 or its corresponding functionality may be implemented in a computing device or devices located external to the machine 10 and/or remote from the field. For instance, path planning, including depth correction, may be implemented off-site (remote from the machine 10) on a device with functionality of the computing system 16. Such remote, off-line prepared path plans may be communicated to the computing system 16 of the machine 10, such as via wireless communication and connection to the network interface 36, or via loading from a storage device, such as a portable memory that couples to an input interface (e.g., Universal Serial Bus connection, Near Field Communications Interface, Bluetooth interface, etc.) of the computing system 16 or control system 22. In some embodiments, path planning may be implemented all or in part in real-time as the machine 10 enters and/or navigates a field.

The computing system 16 is depicted in this example as a computer system (e.g., a personal computer or workstation, an electronic control unit or ECU, etc.), but may be embodied as a programmable logic controller (PLC), FPGA, among other devices. It should be appreciated that certain well-known components of computer systems are omitted here to avoid obfuscating relevant features of the computing system 16. In one embodiment, the computing system 16 comprises one or more processors, such as processor 38, input/output (I/O) interface(s) 40, and memory 42, all coupled to one or more data busses, such as data bus 44. The memory 42 may include any one or a combination of volatile memory elements (e.g., random-access memory RAM, such as DRAM, SRAM, and SDRAM, etc.) and nonvolatile memory elements (e.g., ROM, Flash, solid state, EPROM, EEPROM, hard drive, CDROM, etc.). The memory 42 may store a native operating system, one or more native applications, emulation systems, or emulated applications for any of a variety of operating systems and/or emulated hardware platforms, emulated operating systems, etc. In the embodiment depicted in FIG. 13B, the memory 42 comprises an operating system 46 and auto-guidance software 48. The auto-guidance software 48 comprises path planning software 50, auto-steer software 54, and data module 56 (e.g., a data structure, such as a database). The path planning software 50 comprises working depth compensator software 52, and the data modules 56 comprise map information and machine information. It should be appreciated that in some embodiments, additional (e.g., browser, APIs and/or web-hosting software, such as if located remotely) or fewer software modules (e.g., combined functionality) may be employed in the memory 42 or additional memory. In some embodiments, a separate storage device may be coupled to the data bus 44 (or to network 26, FIG. 13A), such as a persistent memory (e.g., optical, magnetic, and/or semiconductor memory and associated drives). In some embodiments, the software modules 50-56 may be further distributed among additional application, or their respective functionality combined into fewer modules.

The path planning software 50 enables reference determinations for path pre-planning or while in the field. For instance, as is known, the operator may position the machine 10 (FIG. 4A) at or near a starting point in the field, engage auto-guidance functionality, and record start and end points of a path (e.g., A-B waylines, contour waylines, etc.). The path planning software 50 may access the machine information from the data module 56 and based on, for instance, implement width, and generate wayline points for parallel paths that cover the field to be worked. These points, as well as other field information (e.g., sloped terrain, field hazards or relevant features, including easements, water ponds, etc.) may be recorded for subsequent operation. In some embodiments, the field information may be obtained via access to prior map information, such as stored in data module 56 or elsewhere. The working depth compensator software 52 records (or receives via path planning software 50) the working depth (e.g., as communicated by the implement control system 32 or entered by an operator at the user interface 34 and communicated over the network 26 to the working depth compensator software 52), which is also used for subsequent operations. As is known, the auto-steer software 54 compares the wayline points to position information that it receives via satellite (and optionally corrected using correction systems as explained above) and communicates steering commands to the drive/navigation system 30 to guide the machine 10 along the wayline points. Operations performed from the machine 10 may include a first or early stage of multi-stage farming operations, including seeding.

In subsequent farming operations (e.g., agitating the soil, fertilizing, applying pesticides, etc.), the path planning software 50 accesses the recorded wayline points from a prior traversal of the field to be worked and invokes the working depth compensator software 52 to handle traversals along sloped terrain. As set forth above, the working depth compensator software 52 uses the recorded working depth, the slope of the soil surface (e.g., as recorded in the prior traversal or as accessed from map data), and a working height or depth (according to operator input or as communicated by the implement control system 32) and applies these values to Eqn. 1 to generate an offset from the prior reference points along the sloped terrain. The path planning software 50 then uses the new reference points for the sloped sections of the field and communicates these and other reference values to the auto-steer software 54 to enable, in cooperation with the drive/navigation system 30, guided traversal of the field for a second (and subsequent) farming operation. In one embodiment, the reference points for the sloped terrain may be computed in just-in-time fashion (e.g., as the machine 10 approaches within a predetermined distance from the sloped terrain), whereas in some embodiments, the computations may be achieved as a pre-planning tool (at a time of just entering the field, or prior to then).

Note that the data module 56 may include information useful to the generation of reference points, including field maps, which may comprise image data, boundaries, topography, including terrain slope, among other field feature identification and/or location. Some field information may also be inputted manually (e.g., the operator entering information at the user interface 34, which is communicated over the network 26 to the path planning software 50). Field information may also include bodies of water, power lines, easements, conduit locations, etc. Field information may also be extracted from images acquired via manned or unmanned scouting vehicles, satellite, or aerial vehicles (e.g., drones, planes, gliders, helicopters, etc.).

The data module 56 may also include machine information, which may include dimensions and/or performance features of the machine 10 and coupled (including integrated and towed) implements. In other words, the data module 56 may include towing machine information (e.g., width, length, height, track width, ground clearance, function and/or type of machine, performance capabilities, etc.) and implement information (e.g., width, length, height, ground clearance, dispensing performance, such as nozzle types and dispensing trajectory range or other performance, type and/or function of the implement, working height, working depth, angle of articulation, etc.), the implement information being either for integrated implements and/or implements coupled to the front or rear of the towing machine via hitch assemblies or other mechanisms. In some embodiments, the data stored in data module 56 may reside external to the computing system 16, such as in separate storage coupled to the network 26 or in a remote device in communication with the computing system 16 (e.g., accessed via the network interface 36).

The reference points may also be sent to the implement control system 32, which may be used along with map or other information to control implement operations (e.g., which sections or subsections above the field to seed, fertilize, apply pesticides, when to apply, when to raise the tool bar (e.g., at headlands), etc.). The reference points may also be used to enable any offset computations for differences in path travel between the machine 10 and the towed implement.

Execution of the auto-guidance software 48 (and associated software modules 50-56) is implemented by the processor 38 under the management and/or control of the operating system 46. The processor 38 may be embodied as a custom-made or commercially available processor, a central processing unit (CPU) or an auxiliary processor among several processors, a semiconductor based microprocessor (in the form of a microchip), a macroprocessor, one or more application specific integrated circuits (ASICs), a plurality of suitably configured digital logic gates, and/or other well-known electrical configurations comprising discrete elements both individually and in various combinations to coordinate the overall operation of the computing system 16.

The I/O interfaces 40 provide one or more interfaces to the network 26 and other networks. In other words, the I/O interfaces 40 may comprise any number of interfaces for the input and output of signals (e.g., analog or digital data) for conveyance of information (e.g., data) over the network 26. The input may comprise input by an operator or user (operator or user used interchangeably hereinafter, such as to control and/or monitor operations of the machine 10 locally or remotely) through the user interface 34, and input from other devices or systems coupled to the network 26, such as the position determining system 28, the drive/navigation system 30, the implement control system 32, and/or the network interface 36, among other systems or devices.

When certain embodiments of the computing system 16 are implemented at least in part as software (including firmware), as depicted in FIG. 13B, it should be noted that the software can be stored on a variety of non-transitory computer-readable medium for use by, or in connection with, a variety of computer-related systems or methods. In the context of this document, a computer-readable medium may comprise an electronic, magnetic, optical, or other physical device or apparatus that may contain or store a computer program (e.g., executable code or instructions) for use by or in connection with a computer-related system or method. The software may be embedded in a variety of computer-readable mediums for use by, or in connection with, an instruction execution system, apparatus, or device, such as a computer-based system, processor-containing system, or other system that can fetch the instructions from the instruction execution system, apparatus, or device and execute the instructions.

When certain embodiment of the computing system 16 are implemented at least in part as hardware, such functionality may be implemented with any or a combination of the following technologies, which are all well-known in the art: discreet logic circuit(s) having logic gates for implementing logic functions upon data signals, an application specific integrated circuit (ASIC) having appropriate combinational logic gates, a programmable gate array(s) (PGA), a field programmable gate array (FPGA), etc.

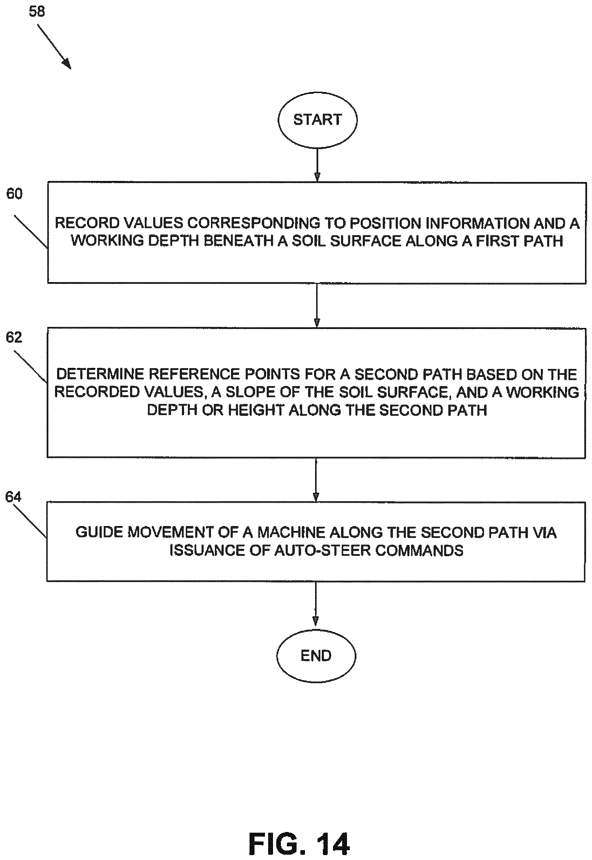

In view of the above description, it should be appreciated that one embodiment of a working depth compensating method 58, depicted in FIG. 14, is disclosed in claim 16.

Any process descriptions or blocks in flow diagrams should be understood as representing modules, segments, or portions of code which include one or more executable instructions for implementing specific logical functions or steps in the process, and alternate implementations are included within the scope of the embodiments in which functions may be executed out of order from that shown or discussed, including substantially concurrently or in reverse order, depending on the functionality involved, as would be understood by those reasonably skilled in the art of the present disclosure.

It should be emphasized that the above-described embodiments of the disclosure, particularly, any "preferred" embodiments, are merely possible examples of implementations, merely set forth for a clear understanding of the principles of a working depth compensator. Many variations and modifications may be made to the above-described embodiment(s) of the working depth compensator within the scope of the disclosure as defined by the claims.

**Claims**

1. A system, comprising:

   a receiver comprising an antenna configured to receive position information; and
   a computing system in communication with the receiver, the computing system configured to:

   record values corresponding to the position information and a working depth beneath a soil surface along a first path;
   determine one or more reference points for a second path based on the recorded values, a slope of the soil surface, and a working depth or height along the second path, the reference points being determined by computing an offset from the first path based at least on the working depth and the slope of the soil surface or driven terrain; and
   guide movement of a machine along the second path.

2. The system of claim 1, wherein the one or more reference points includes a navigation point of the machine.

3. The system of claim 1, wherein the one or more reference points includes at least one waypoint associated with a wayline to guide movement of a machine along the second path.

4. The system of claim 1, wherein the one or more reference points are located on the soil surface.

5. The system of claim 1, wherein the one or more reference points are located above the soil surface.

6. The system of claim 1, further comprising a user interface, wherein the computing system is configured to receive the working depth or height via user input entered at the user interface.

7. The system of claim 1, further comprising an implement control system, wherein the computing system is configured to receive a signal corresponding to the working depth or height from the implement control system.

8. The system of claim 1, wherein the computing system is configured to receive the slope value by accessing map data.

9. The system of claim 1, wherein the computing system is configured to determine the one or more reference points based further on an offset from a location of the antenna.

10. The system of claim 1, wherein the computing system cooperates with an implement control system to control operations of at least first and second stages of a multi-stage farming operation, with each of the stages being distinct in function and implemented over non-overlapping intervals of time.

11. The system of claim 10, wherein the operations of the first stage are implemented at least beneath the soil surface at the recorded working depth and the operations of the second stage are implemented at or above the soil surface based on the reference points being respectively at or above the soil surface.

12. The system of claim 11, wherein the operations of the first stage include seeding at the recorded working depth and the operations of the second stage include at least one of agitating the soil surface on each side of the reference points but not on the reference points, fertilizing plants grown from the seeding, or applying pesticides to the plants grown from the seeding.

13. The system of claim 11, wherein the operations of the first stage include seeding at the recorded working depth and the operations of the second stage include at least forming a soil dam.

14. The system of claim 11, further comprising a self-propelled vehicle, the self-propelled vehicle comprising the machine, wherein the operations of the first and second stages are performed from the self-propelled vehicle.

15. The system of claim 11, further comprising a self-propelled vehicle and an implement towed by the self-propelled vehicle, the self-propelled vehicle comprising the machine, wherein the operations of the first and second stages are performed from the implement.

**16.** A computer-implemented method, comprising:

recording values corresponding to position information and a working depth beneath a soil surface along a first path;

determining one or more reference points for a second path based on the recorded values, a slope of the soil surface, and a working depth or height along the second path; and

guiding movement of a machine along the second path via issuance of auto-steer commands;

wherein determining reference points for the second path comprises at least computing an offset from the first path based at least on the working depth and the slope of the soil surface.

**17.** The method of claim 16, wherein determining the reference points comprises determining the reference points to be either at the soil surface or above the soil surface.

**18.** The method of claim 16, further comprising receiving the working depth or height via either user input or via signals from an implement control system.

**Patentansprüche**

**1.** System mit:

einem Empfänger mit einer Antenne, die zum Empfangen von Positionsinformationen konfiguriert ist; und

einem Computersystem, welches mit dem Empfänger kommuniziert, wobei das Computersystem konfiguriert ist zum:

Aufnehmen oder Speichern von Werten, die den Positionsinformationen und einer Arbeitstiefe unter einer Bodenoberfläche entlang eines ersten Pfades entsprechen;

Ermitteln mindestens eines Referenzpunkts für einen zweiten Pfad auf Basis der aufgenommenen oder gespeicherten Werte, einer Steigung der Bodenoberfläche und einer Arbeitstiefe, Höhe oder Arbeitshöhe entlang des zweiten Pfades, wobei die Referenzpunkte ermittelt werden durch Berechnung eines Versatzes gegenüber dem ersten Pfad auf Basis von zumindest einer Arbeitstiefe und der Steigung der Oberfläche oder des befahrenen Terrains; und

Führen der Bewegung einer Maschine entlang des zweiten Pfades.

**2.** System nach Anspruch 1, wobei der mindestens eine Referenzpunkt einen Navigationspunkt der Maschine beinhaltet.

**3.** System nach Anspruch 1, wobei der mindestens eine Referenzpunkt mindestens einen Wegpunkt beinhaltet, der einer Wegelinie der Führungsbewegung einer Maschine entlang des zweiten Pfades zugeordnet ist.

**4.** System nach Anspruch 1, wobei der mindestens eine Referenzpunkt auf der Bodenoberfläche angeordnet ist.

**5.** System nach Anspruch 1, wobei der mindestens eine Referenzpunkt über der Bodenoberfläche angeordnet ist.

**6.** System nach Anspruch 1, des Weiteren mit einem Benutzer-Interface, wobei das Computersystem konfiguriert ist, um die Arbeitstiefe, Höhe oder Arbeitshöhe über eine Nutzereingabe, die in das Benutzer-Interface eingegeben wird, zu empfangen.

**7.** System nach Anspruch 1 des Weiteren mit einem Geräte-Steuersystem oder Geräte-Regelsystem, wobei das Computersystem konfiguriert ist zum Empfangen eines Signals von dem Geräte-Steuersystem oder Geräte-Regelsystem, welches der Arbeitstiefe, Höhe oder Arbeitshöhe entspricht.

**8.** System nach Anspruch 1, wobei das Computersystem konfiguriert ist zum Empfangen eines Steigungswerts unter Zugriff auf Kartendaten.

**9.** System nach Anspruch 1, wobei das Computersystem zum Ermitteln mindestens eines Referenzpunkts auf Basis eines Versatzes gegenüber einem Ort der Antenne konfiguriert ist.

10. System nach Anspruch 1, wobei das Computersystem mit einem Geräte-Steuersystem oder Geräte-Regelsystem zusammenwirkt zur Steuerung oder Regelung des Betriebs mindestens einer ersten und zweiten Stufe eines mehrstufigen Ackerbau-Betriebsvorgangs, wobei jede der Stufen eine eigene Funktion erfüllt und die Stufen in nicht überlappenden Zeitintervallen implementiert sind.

11. System nach Anspruch 10, wobei die Betriebsvorgänge der ersten Stufe zumindest unter der Bodenoberfläche bei einer aufgenommenen oder gespeicherten Arbeitstiefe implementiert sind oder durchgeführt werden und die Betriebsvorgänge der zweiten Stufe bei oder über der Bodenoberfläche auf Basis der Referenzpunkte, die jeweils bei oder nahe der Bodenoberfläche sind, implementiert sind oder durchgeführt werden.

12. System nach Anspruch 11, wobei die Betriebsvorgänge der ersten Stufe ein Ausbringen von Samen bei der aufgenommen oder gespeicherten Arbeitstiefe und die Betriebsvorgänge der zweiten Stufe das Bewegen der Bodenoberfläche auf jeder Seite von den Referenzpunkten, aber nicht an den Referenzpunkten, das Düngen oder Befruchten von Pflanzen, die aus dem Samen gewachsen sind, oder das Applizieren von Pestiziden auf die Pflanzen, die aus den Samen gewachsen sind, beinhalten.

13. System nach Anspruch 11, wobei die Betriebsvorgänge der ersten Stufe das Ausbringen von Samen bei einer aufgenommen oder gespeicherten Arbeitstiefe und die Betriebsvorgänge der zweiten Stufe mindestens das Ausbilden eines Bodendamms beinhalten.

14. System nach Anspruch 11, des Weiteren mit einem selbst angetriebenen Fahrzeug, wobei das selbst angetriebene Fahrzeug die Maschine aufweist, wobei die Betriebsvorgänge der ersten und zweiten Stufe von dem selbst angetriebenen Fahrzeug ausgeführt werden.

15. System nach Anspruch 11, des Weiteren mit einem selbst angetriebenen Fahrzeug und einem Gerät, welches von dem selbst angetriebenen Fahrzeug gezogen wird, wobei das selbst angetriebene Fahrzeug die Maschine aufweist und die Betriebsvorgänge der ersten und zweiten Stufe von dem Gerät ausgeführt werden.

16. Computerimplementiertes Verfahren mit:

einem Aufnehmen oder Speichern von Werten, die Positionsinformationen und einer Arbeitstiefe unter einer Bodenfläche entlang eines ersten Pfades entsprechen;
einem Ermitteln mindestens eines Referenzpunktes für einen zweiten Pfad auf Basis der aufgenommenen oder gespeicherten Werte, einer Steigung der Bodenoberfläche und einer Arbeitstiefe, Höhe oder Arbeitshöhe entlang des zweiten Pfades; und
einer Führung der Bewegung einer Maschine entlang des zweiten Pfades durch die Erteilung von automatischen Lenkbefehlen;
wobei das Ermitteln der Referenzpunkte des zweiten Pfades zumindest das Berechnen eines Versatzes von dem ersten Pfad auf Basis zumindest der Arbeitstiefe und der Steigung der Bodenoberfläche aufweist.

17. Verfahren nach Anspruch 16, wobei das Ermitteln der Referenzpunkte das Ermitteln beinhaltet, dass die Referenzpunkte entweder an der Bodenoberfläche oder über der Bodenoberfläche sind.

18. Verfahren nach Anspruch 16, des Weiteren mit einem Empfangen der Arbeitstiefe, Höhe oder Arbeitshöhe entweder über eine Nutzereingabe oder über Signale von einem Geräte-Steuersystem oder Geräte-Regelsystem.

**Revendications**

1. Dispositif, comprenant :

un récepteur comprenant une antenne configurée de manière à recevoir des informations de position ; et
un dispositif de traitement en communication avec le récepteur, le dispositif de traitement étant configuré de manière à :

enregistrer des valeurs correspondant aux informations de position et à une profondeur de travail sous la surface du sol le long d'un premier trajet ;
déterminer un ou plusieurs points de référence pour un second trajet sur la base des valeurs enregistrées, une pente de la surface du sol, et une profondeur ou hauteur de travail le long du second trajet, les points de référence étant déterminés en calculant un décalage à partir du premier trajet, au moins sur la base de la profondeur de travail et de la pente de la surface du sol ou du terrain parcouru ; et

guider le déplacement d'une machine le long du second trajet.

2. Dispositif selon la revendication 1, dans lequel les un ou plusieurs points de référence comportent un point de navigation de la machine.

3. Dispositif selon la revendication 1, dans lequel les un ou plusieurs points de référence comportent au moins un point de trajet associé à une ligne de trajet afin de guider le déplacement d'une machine le long du second trajet.

4. Dispositif selon la revendication 1, dans lequel les un ou plusieurs points de référence sont situés sur la surface du sol.

5. Dispositif selon la revendication 1, dans lequel les un ou plusieurs points de référence sont situés au-dessus de la surface du sol.

6. Dispositif selon la revendication 1, comprenant, en outre, une interface d'utilisateur, dans lequel le dispositif de traitement est configuré de manière à recevoir la profondeur ou hauteur de travail par l'intermédiaire d'une entrée d'utilisateur saisie au niveau de l'interface d'utilisateur.

7. Dispositif selon la revendication 1, comprenant, en outre, un dispositif de commande d'outillage, dans lequel le dispositif de traitement est configuré de manière à recevoir un signal correspondant à la profondeur ou hauteur de travail du dispositif de commande d'outillage.

8. Dispositif selon la revendication 1, dans lequel le dispositif de traitement est configuré de manière à recevoir la valeur de pente par accès aux données cartographiques.

9. Dispositif selon la revendication 1, dans lequel le dispositif de traitement est configuré de manière à déterminer les un ou plusieurs points de référence sur la base, en outre, d'un décalage à partir d'un emplacement de l'antenne.

10. Dispositif selon la revendication 1, dans lequel le dispositif de traitement coopère avec un dispositif de commande d'outillage afin de commander des opérations d'au moins des première et les seconde étapes d'une opération agricole à plusieurs étapes, chacune des étapes étant de fonction distincte et mise en oeuvre sur des intervalles de temps sans recouvrement.

11. Dispositif selon la revendication 10, dans lequel les opérations de la première étape sont mises en oeuvre au moins au-dessous de la surface du sol à la profondeur de travail enregistrée et les opérations de la seconde étape sont mises en oeuvre au niveau de la surface du sol ou au-dessus de celle-ci sur la base des points de référence situés respectivement au niveau de la surface du sol ou au-dessus de celle-ci.

12. Dispositif selon la revendication 11, dans lequel les opérations de la première étape comportent l'ensemencement à la profondeur de travail enregistrée et les opérations de la seconde étape comportent au moins l'une du mélange de la surface du sol de chaque côté des points de référence mais pas sur les points de référence, de la fertilisation des plantes développées depuis l'ensemencement, ou de l'application de pesticides sur les plantes développées depuis l'ensemencement.

13. Dispositif selon la revendication 11, dans lequel les opérations de la première étape comportent l'ensemencement à la profondeur de travail enregistrée et les opérations de la seconde étape comportent la formation d'au moins un barrage de terre.

14. Dispositif selon la revendication 11, comprenant, en outre, un véhicule automoteur, le véhicule automoteur comprenant la machine, dans lequel les opérations des première et seconde étapes sont exécutées à partir du véhicule automoteur.

15. Dispositif selon la revendication 11, comprenant, en outre, un véhicule automoteur et un outillage tracté par le véhicule automoteur, le véhicule automoteur comprenant la machine, dans lequel les opérations des première et seconde étapes sont exécutées à partir de l'outillage.

16. Procédé mis en oeuvre sur ordinateur, comprenant :

l'enregistrement de valeurs correspondant à des informations de position et à une profondeur de travail sous une surface du sol le long d'un premier trajet ;
la détermination d'un ou plusieurs points de référence pour un second trajet sur la base des valeurs enregistrées, d'une pente de la surface du sol et d'une profondeur ou hauteur de travail le long du second trajet ; et
le guidage du déplacement d'une machine le long du second trajet par la production de consignes de pilotage automatique ;
dans lequel la détermination de points de référence pour le second trajet comprend au moins le calcul d'un décalage à partir du premier trajet au moins sur la base de la profondeur de travail et de la pente de la surface du sol.

17. Procédé selon la revendication 16, dans lequel la détermination des points de référence comprend la détermination des points de référence de manière à être soit au niveau de la surface du sol soit au-dessus de la surface du sol.

18. Procédé selon la revendication 16, comprenant, en outre, la réception de la profondeur ou hauteur de travail soit par l'intermédiaire d'entrée d'utilisateur soit par l'intermédiaire de signaux à partir d'un dispositif de commande d'outillage.

FIG. 1 (PRIOR ART)

FIG. 2 (PRIOR ART)

FIG. 3 (PRIOR ART)

# FIG. 4A

# FIG. 4B

EP 3 618 600 B1

FIG. 5B

FIG. 5A

FIG. 6B

FIG. 6A

# FIG. 6C

α = 0

α > 0

NP-WD4

α

α1

G1

T

NP

α2

G1

NP-WD3

WL=S

## FIG. 7B

## FIG. 7A

FIG. 8B

FIG. 8A

FIG. 9A

FIG. 9B

# FIG. 9C

$n4=n1$

$\alpha = 0$

$\alpha > 0$

FIG. 7A

OP4=S

WP4=NP

C4

$\alpha$

WL4

S4

# FIG. 9D

$w5=w2$

$n5=n2$

$\alpha = 0$

$\alpha > 0$

S=OP4=OP5

FIG. 8A

WP4

WP5=NP

WL5

WL4

S5

# FIG. 9E

$w6=w3$

$n6=n3$

$\alpha = 0$

$\alpha > 0$

S=OP4=OP6

FIG. 9A

WP4

WP6=NP

WL6

WL4

S6

EP 3 618 600 B1

# FIG. 10A

# FIG. 10B

FIG. 11A

FIG. 11B

Fig. 12C

Fig. 12D

Fig. 12A

Fig. 12B

EP 3 618 600 B1

22

```
                    ┌──────────────┐   ┌──────────────┐
                    │   POSITION   │   │  DRIVE/NAV   │
                    │ DETERMINING  │   │  SYSTEM 30   │
                    │  SYSTEM 28   │   │              │
                    └──────┬───────┘   └──────┬───────┘
┌──────────────┐          │        26         │          ┌──────────────┐
│  COMPUTING   │          │       /           │          │  IMPLEMENT   │
│  SYSTEM 16   │──────────┴───────────────────┴──────────│   CONTROL    │
│              │                                          │  SYSTEM 32   │
└──────────────┘   ┌──────────────┐   ┌──────────────┐   └──────────────┘
                   │   NETWORK    │   │     USER     │
                   │  INTERFACE 36│   │  INTERFACE   │
                   │              │   │      34      │
                   └──────────────┘   └──────────────┘
```

**FIG. 13A**

26

COMPUTING
SYSTEM 16

PROCESSOR
38

I/O
INTERFACES
40

DATA BUS 44

MEMORY 42

OPERATING SYSTEM 46

AUTO-GUIDANCE SOFTWARE 48

PATH PLANNING SOFTWARE 50

WORKING DEPTH COMPENSATOR SOFTWARE 52

AUTO-STEER SOFTWARE 54

DATA MODULE 56

MAP INFORMATION

MACHINE INFORMATION

FIG. 13B

EP 3 618 600 B1

58

START

60

RECORD VALUES CORRESPONDING TO POSITION INFORMATION AND A WORKING DEPTH BENEATH A SOIL SURFACE ALONG A FIRST PATH

62

DETERMINE REFERENCE POINTS FOR A SECOND PATH BASED ON THE RECORDED VALUES, A SLOPE OF THE SOIL SURFACE, AND A WORKING DEPTH OR HEIGHT ALONG THE SECOND PATH

64

GUIDE MOVEMENT OF A MACHINE ALONG THE SECOND PATH VIA ISSUANCE OF AUTO-STEER COMMANDS

END

# FIG. 14

**EP 3 618 600 B1**

**REFERENCES CITED IN THE DESCRIPTION**

**Patent documents cited in the description**

- US 20160355187
- US 20180024252
- US 20160355187 A
- US 20180024252 A
- US 2012296529 A